(19) Europäisches Patentamt / European Patent Office / Office européen des brevets

(11) **EP 2 695 106 B1**

(12) **EUROPEAN PATENT SPECIFICATION**

(45) Date of publication and mention of the grant of the patent:
**10.05.2023 Bulletin 2023/19**

(21) Application number: **12715888.9**

(22) Date of filing: **03.04.2012**

(51) International Patent Classification (IPC):
**G06V 10/46** *(2022.01)*

(52) Cooperative Patent Classification (CPC):
**G06V 10/462**

(86) International application number:
**PCT/EP2012/056042**

(87) International publication number:
**WO 2012/136642 (11.10.2012 Gazette 2012/41)**

(54) **FEATURE DESCRIPTOR FOR IMAGE SECTIONS**

MERKMALSBESCHREIBUNG FÜR BILDSEGMENTE

DÉSCRIPTEUR DE CARACTÉRISTIQUES DE RÉGIONS D'IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2011 US 201161473589 P**

(43) Date of publication of application:
**12.02.2014 Bulletin 2014/07**

(73) Proprietor: **Fraunhofer-Gesellschaft zur Förderung der angewandten Forschung e.V. 80686 München (DE)**

(72) Inventors:
 • **ZILLY, Frederik**
 **14165 Berlin (DE)**
 • **RIECHERT, Christian**
 **10587 Berlin (DE)**
 • **KAUFF, Peter**
 **14197 Berlin (DE)**

(74) Representative: **Schenk, Markus et al Schoppe, Zimmermann, Stöckeler Zinkler, Schenk & Partner mbB Patentanwälte Radlkoferstrasse 2 81373 München (DE)**

(56) References cited:
**US-A- 5 291 560     US-A1- 2010 111 416**

 • XUBING ZHANG ET AL: "Feature Extraction of Low Frequency Wavelet Coefficients Based on Non-Parameter Local Transformation", 2009 1ST INTERNATIONAL CONFERENCE ON INFORMATION SCIENCE AND ENGINEERING (ICISE 2009) - 26-28 DEC. 2009 - NANJING, CHINA, IEEE, PISCATAWAY, NJ, USA, 26 December 2009 (2009-12-26), pages 1254-1257, XP031662312, ISBN: 978-1-4244-4909-5
 • TASKEED JABID ET AL: "Local Directional Pattern (LDP) - A Robust Image Descriptor for Object Recognition", ADVANCED VIDEO AND SIGNAL BASED SURVEILLANCE (AVSS), 2010 SEVENTH IEEE INTERNATIONAL CONFERENCE ON, IEEE, PISCATAWAY, NJ, USA, 29 August 2010 (2010-08-29), pages 482-487, XP031772038, ISBN: 978-1-4244-8310-5
 • DAUGMAN J G: "HIGH CONFIDENCE VISUAL RECOGNITION OF PERSONS BY A TEST OF STATISTICAL INDEPENDENCE", IEEE TRANSACTIONS ON PATTERN ANALYSIS AND MACHINE INTELLIGENCE, IEEE SERVICE CENTER, LOS ALAMITOS, CA, US, vol. 15, no. 11, 1 November 1993 (1993-11-01), pages 1148-1161, XP000413106, ISSN: 0162-8828, DOI: 10.1109/34.244676

- SMITH J R ET AL: "AUTOMATED BINARY TEXTURE FEATURE SETS FOR IMAGE RETRIEVAL", 1996 IEEE INTERNATIONAL CONFERENCE ON ACOUSTICS, SPEECH, AND SIGNAL PROCESSING - PROCEEDINGS. (ICASSP). ATLANTA, MAY 7 - 10, 1996; [IEEE INTERNATIONAL CONFERENCE ON ACOUSTICS, SPEECH, AND SIGNAL PROCESSING - PROCEEDINGS. (ICASSP)], NEW YORK, IEEE, US, vol. CONF. 21, 7 May 1996 (1996-05-07), pages 2239-2242, XP000681679, DOI: 10.1109/ICASSP.1996.545867 ISBN: 978-0-7803-3193-8
- CHARIKAR M S: "Similarity Estimation Techniques from Rounding Algorithms" In: ED - ASSOCIATION FOR COMPUTING MACHINERY: "Proceedings of the thiry-fourth annual ACM symposium on Theory of computing (STOC '02)", [Online] 19 May 2002 (2002-05-19), ACM, XP008103597, ISBN: 978-1-58113-495-7 pages 380-388, Retrieved from the Internet: URL:http://www.zentralblatt-math.org/zmath/en/search/?an=1074.68502> the whole document
- FREDERIK ZILLY ET AL: "Semantic Kernels Binarized - A Feature Descriptor for Fast and Robust Matching", VISUAL MEDIA PRODUCTION (CVMP), 2011 CONFERENCE FOR, IEEE, 16 November 2011 (2011-11-16), pages 39-48, XP032074516, DOI: 10.1109/CVMP.2011.11 ISBN: 978-1-4673-0117-6 cited in the application
- LI J ET AL: "A comprehensive review of current local features for computer vision", NEUROCOMPUTING, ELSEVIER SCIENCE PUBLISHERS, AMSTERDAM, NL, vol. 71, no. 10-12, 1 June 2008 (2008-06-01), pages 1771-1787, XP022703774, ISSN: 0925-2312, DOI: 10.1016/J.NEUCOM.2007.11.032 [retrieved on 2008-02-29]
- MIKOLAJCZYK K ET AL: "A performance evaluation of local descriptors", IEEE TRANSACTIONS ON PATTERN ANALYSIS AND MACHINE INTELLIGENCE, IEEE SERVICE CENTER, LOS ALAMITOS, CA, US, vol. 27, no. 10, 1 October 2005 (2005-10-01), pages 1615-1630, XP002384824, ISSN: 0162-8828, DOI: 10.1109/TPAMI.2005.188

**Description**

Embodiments of the present invention relate to an apparatus for determining a feature descriptor of an image section. Some embodiments relate to a method for determining a feature descriptor of an image section. Some embodiments relate to binarized semantic kernels binarized (semantic kernels binarized) and/or to a feature descriptor for fast and robust matching. Embodiments of the present invention relate to an approach for feature description used in image processing and robust image recognition algorithms such as 3D camera tracking, view reconstruction or 3D scene analysis or other applications of image processing.

A distinction may be made between interest point detection and description. The former is commonly performed in scale space, while the latter is used to describe a normalized support region using histograms of gradients or similar derivatives of the grayscale image patch. This approach has proven to be quite successful. However, the descriptors are usually of high dimensionality in order to achieve a high descriptiveness.

In the past years much attention has been paid to the development of robust interest point detectors and descriptors. At the end of the description, a list of references is included and numbers appearing in square brackets, such as [1], typically refer to this reference list. SIFT (Scale Invariant Feature Transform) [1] and SURF (Speeded Up Robust Feature) [2] are two prominent examples of such combined interest point detectors with associated descriptors. Moreover a number of dedicated region detectors have been proposed in [7][8][9][10][23]. In-depth comparisons of the different detectors and descriptors have been carried out in [4] and [5].

Usually, the interest point detector searches for extremal values of a defined function (e.g. Laplacian/Difference of Gaussian or Determinant of Hessian functions) in scale space. Later on, a region around this interest point, nominated as support region, is described using a specific descriptor, while the support region might be normalized in scale and possibly in orientation (to achieve scale invariance and rotational invariance respectively). An automatic scale selection is commonly performed as proposed in [7]. Some region detectors are even invariant against affine transformations [6].

The commonly used descriptors, such as SIFT [1], SURF [2], or GLOH (Gradient Location and Orientation Histogram) [4] use histograms of gradients to describe the support region. High dimensional feature vectors are used to describe the feature point. SURF uses 64 dimensions while SIFT uses 128 dimensions. Each dimension is typically represented by a floating point number or by a 1-byte integer value. This leads to a high memory usage and a fairly slow matching process.

Consequently, effort has been spent to reduce the dimensionality. PCA-SIFT proposed by [14] and GLOH [4] reduce the dimensions by performing a principal component analysis of the feature vectors. However, the description process is slowed down by this operation. Moreover, the descriptors itself remain floating point numbers or integer values which use the relatively slow L2-norm to match. On the other hand, the matching quality in terms of recall rate is much higher than simpler interest point detectors such as the Harris Corner detector [11] in combination with a cross-correlation based matching.

In the recent past, research has been conducted to build descriptors consisting of binary elements, denoted as binary strings in order to reduce the bitrate needed to transmit and to store the descriptors and to reduce the matching time, as matching can then be performed using the Hamming distance which can be efficiently computed on modern CPUs. Different descriptor binarization strategies exist. Some approaches first compute a higher dimensional descriptor, which will later be binarized by hashing the real-valued interest point descriptors [19], by performing a transform coding [20] or by direct binarization of the descriptor components [22]. A good overview of state of the art strategies for reducing the descriptor bitrate is given in [21] where a descriptor designed for efficient compression is being proposed.

On the other hand, an even further speed up can be achieved when the description process leads directly to a binarized descriptor. A prominent example for this method is the BRIEF descriptor (Binary Robust Independent Elementary Features) [18]. A number of intensity comparisons (e.g. 256 in the case of BRIEF-256) between pairs of pixels is conducted which results in a 256-bit descriptor. The descriptor is a binary string. Each bit represents a simple comparison between two points inside a 'patch'. A key-point may be defined which is centered at the patch area. A bit is set to '1' if, during a corresponding comparison, the first point is of higher intensity than the other point, '0' otherwise. The paper [18] suggests different ways of selecting points. The empirical results with best recognition rates are points chosen with Gaussian distributed at the image center. The image typically needs to be smoothed before comparing pixels to reduce noise. Hamming distance is used for matching. This takes advantage of the XOR and bit-counting CPU instructions.

The applications and tasks for which feature descriptors may be used are numerous, such as, for example object recognition, identification, motion analysis, scene reconstruction, 3D camera tracking, view reconstruction, 3D scene analysis, etc.. A first method for determining a feature descriptor may be appropriate for a first application while a second method may be more appropriate for a second application.

Therefore, it is the object of the present invention to provide an alternative concept for determining a feature descriptor. It may be desirable that the new approach has a low memory usage and/or good matching performance. In addition or in the alternative it may be desirable that the proposed approach has good real-time capabilities.

This object is solved by an apparatus for determining a feature descriptor according to claim 1, a method for determining a feature descriptor according to claim 10, and a computer program according to claim 15.

In some embodiments of the present invention, a number of convolutions with a set of folding kernels is performed on the support region (typically the image section). The kernels consist of basic geometric structures, selected from edges, ridges, corners, blobs, and saddles. As all these kernels have a dedicated meaning in computer vision, they may therefore be referred to as semantic kernels. As the filter responses are binarized, the method may be referred to as semantic kernels binarized, or SKB.

According to further embodiments, the kernel evaluator may be configured to perform a convolution between the semantic kernels and the one or more evaluation regions. In terms of a method, determining the plurality of filter responses may comprise performing a convolution between the semantic kernels and the one or more evaluation regions.

Each semantic kernel represents a basic geometric structure, the basic geometric structure being a corner, an edge, a ridge, a blob, or a saddle.

The image section is determined based on an interest point that is provided as an input parameter to the apparatus. The apparatus further comprises an interpolator configured to interpolate the image section based on the scale of the interest point to obtain a normalized support region that corresponds to the image section. The method for determining the feature descriptor comprises the following steps: receiving an interest point as an input parameter; receiving information regarding a position and a scale of the interest point; determining the image section based on an interest point; and interpolating the image section based on the scale of the interest point to obtain a normalized support region that corresponds to the image section.

According to further embodiments the information regarding the position of the interest point may be a subpixel position of the interest point.

According to further embodiments the interpolator may be further configured to determine a first normalized support region for a first subset of the plurality of semantic kernels and a different second normalized support region for a second subset of the plurality of semantic kernels. In terms of a method, interpolating the image section may comprise determining a first normalized support region for a first subset of the plurality of semantic kernels; and determining a different second normalized support region for a second subset of the plurality of semantic kernels.

The apparatus further comprises a feature descriptor generator configured to combine the plurality of comparison results to form at least a portion of the feature descriptor.

Each of the plurality of comparison results is represented by one bit or by two bits.

The feature descriptor generator is configured to combine the plurality of comparison results to form at least a portion of the feature descriptor by using the plurality of comparison results to form one or more bytes of the feature descriptor.

According to further embodiments at least two evaluation regions may overlap in a portion of the image section.

According to further embodiments the comparator may be configured to determine, as the comparison result, a bit pair for each one of the plurality of filter responses, wherein a value of the bit pair represents a relation of the corresponding filter response to the at least one threshold and a second threshold. In terms of a method, comparing the filter responses may comprise a determination of a bit pair for each one of the plurality of filter responses as the comparison result, wherein a value of the bit pair represents a relation of the corresponding filter response to the at least one threshold and a second threshold.

According to further embodiments the comparator may be further configured to adjust the at least one threshold so that a predetermined number of filter responses exceed the threshold.

Embodiments of the present invention are described herein making reference to the appended drawings.

| | |
|---|---|
| Fig. 1 | shows a schematic block diagram of an overall image processing scheme to provide an overview of a possible application of an apparatus for determining a feature descriptor. |
| Fig. 2 | schematically illustrates a kernel used by a feature detector for searching extremal values of the Laplacian of Gaussian in scale space. |
| Fig. 3 | illustrate an aspect of feature detection, in particular a non-maximum suppression and local search for extremal values. |
| Fig. 4 | illustrates a first option of a support region used for determining the feature descriptor associated to an interest point. |
| Fig. 5 | schematically shows an example of a corner-like kernel of size 4 x 4. |
| Fig. 6 | illustrates an overlap of kernel set evaluation regions. |
| Fig. 7 | illustrates a second option for a support region used for determining the feature descriptor associated to an interest point. |
| Figs. 8A to 8D | schematically illustrate four different edge-like kernels. |
| Figs. 9A to 9D | schematically illustrate four different corner-like kernels. |
| Figs. 10A to | 10D schematically illustrate four different ridge-like kernels. |

| Figs. 11A to | 11D schematically illustrate different blob-like and saddle-like kernels. |
| Fig. 12 | schematically shows a block diagram of an apparatus for determining a feature descriptor, which is not an embodiment of the present invention. |
| Fig. 13 | schematically shows a block diagram of an apparatus for determining a feature descriptor according to further embodiments. |
| Fig. 14 | schematically illustrates a relation between an image section (e.g., support region), an evaluation region, and one semantic kernel. |
| Fig. 15 | schematically illustrates filter responses and corresponding comparison results. |
| Fig. 16 | shows a schematic flow diagram of a method for determining a feature descriptor according to embodiments. |
| Fig. 17 | shows a schematic flow diagram of a method for determining a feature descriptor according to further embodiments. |
| Fig. 18A | graphically illustrates the results of a performance comparison of the feature descriptor determination according to embodiments and other feature descriptor determination strategies for a first set of test data. |
| Fig. 18B | graphically illustrates the results of a performance comparison of the feature descriptor determination according to embodiments and other feature descriptor determination strategies for a second set of test data. |
| Figs. 19A to 19D | graphically illustrate the results of performance comparisons of the feature descriptor determination according to embodiments and other feature descriptor determination strategies for a different sets of test data. |
| Fig. 20 | shows a screenshot of a real-time stereo matching application with matching results obtained using a feature descriptor determination according to embodiments. |
| Figs. 21A to 21D | illustrate a comparison of recognition rates of the feature descriptor according to embodiments and the BRIEF-256 descriptor for four different sets of test data. |

Equal or equivalent elements or elements with equal or equivalent functionality are denoted in the following description by equal or equivalent reference numerals.

In the following description, a plurality of details are set forth to provide a more thorough explanation of embodiments of the present invention. However, it will be apparent to one skilled in the art that embodiments of the present invention may be practiced without these specific details. In other instances, well-known structures and devices are shown in block diagram form rather than in detail in order to avoid obscuring embodiments of the present invention. In addition, features of the different embodiments described hereinafter may be combined with each other, unless specifically noted otherwise.

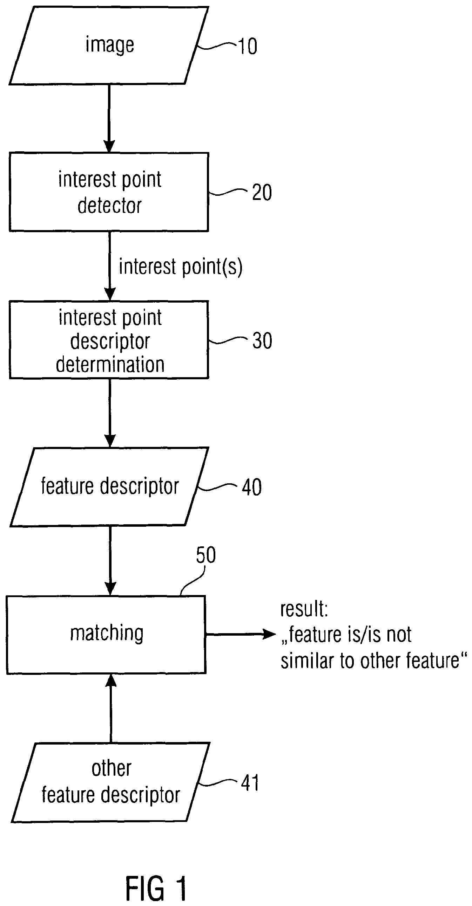

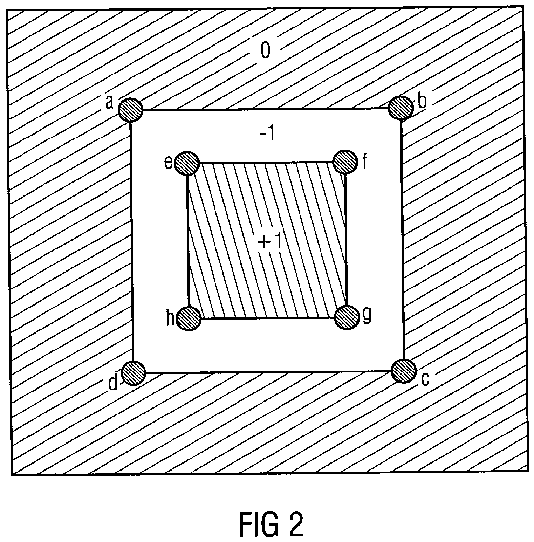

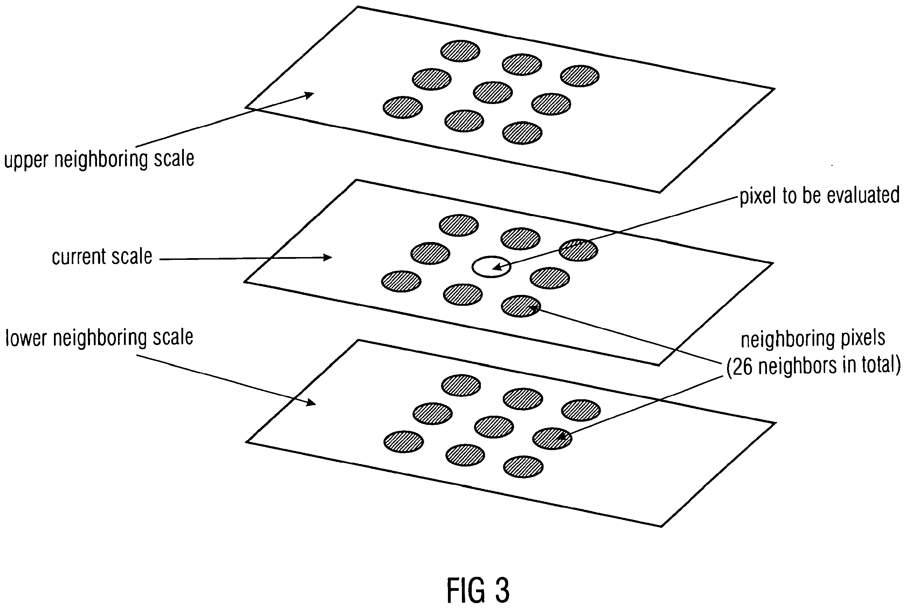

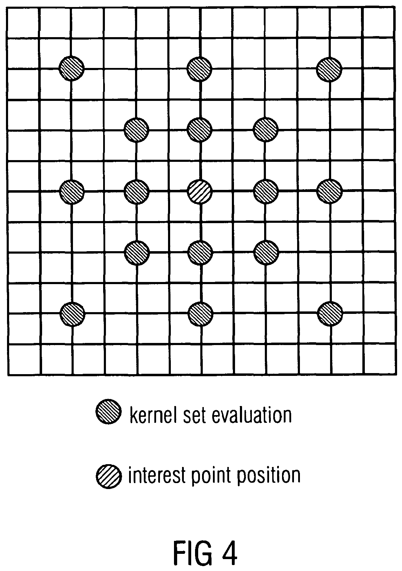

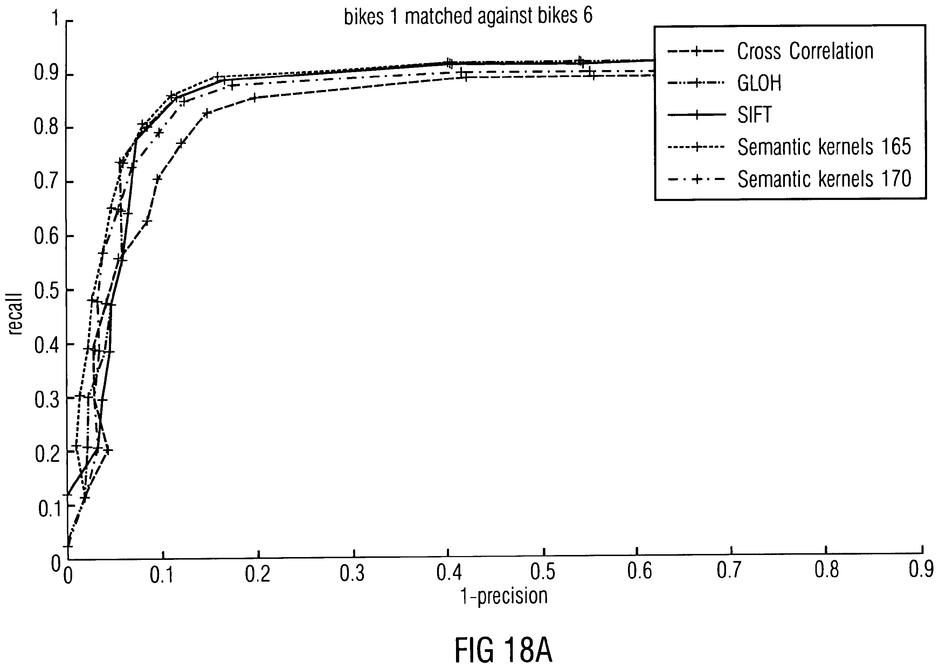

Embodiments relate to the SKB descriptor and/or to the method for determining a feature descriptor which are described in relation to Figs. 4 to 11 and 13 to 17. However, to demonstrate its capability for real-time applications in a stereo matching environment, we briefly describe the complete processing chain (e.g., Fig. 1) which includes a fast interest point detector described in relation to Figs. 2 and 3. Different matching strategies exploiting the results produced by the SKB descriptor and/or the feature descriptor determination method are also described below. In Figs. 18A to 21D and the associated description, results are presented, i.e., comparisons with other descriptors and a proof of concept of the real-time capability of the feature descriptor in combination with a fast interest point detector in a stereo matching environment.

Fig. 1 illustrates a schematic block diagram of an image processing scheme in order to give an overview of the environment in which a feature descriptor determination may be used. Clearly, the image processing scheme schematically shown in Fig. 1 is an example only and by no means to be construed as limiting an applicability of embodiments. According to the image processing scheme, an image 10 is provided to an interest point detector 20. The interest point detector is configured to determine one or more interest points within the image. Interest points typically indicate a region within the image 10 in which the image contains at least one image feature. An image feature is typically associated to a local spatial variation of an image property, e.g., a gray-scale value or a color intensity. The interest point(s) is/are forwarded to an interest point descriptor determination 30. The interest point descriptor determination performs an analysis of the image in the vicinity of a given interest point to determine a feature descriptor 40. The feature descriptor 40 typically describes a visual content of the vicinity of the interest point. The feature descriptor 40 may then be compared with another feature descriptor 41 by means of a matching 50. The other feature descriptor 41 may originate, for example, from the same image 10 (e.g., to determine a periodicity within the image), from another image (e.g., in a stereo-matching application where the image 10 is the left image and the other image is the right image), or from a database in order to classify or identify the image feature. A result of the matching indicates whether the feature at the interest point in the image 10 is similar to the other feature, or not.

In Figs. 2 and 3 and the following description associated to Figs. 2 and 3, the interest point detector used in a possible real-time implementation is briefly described. The mentioned real-time application is provided as an example, only. The interest point detector is a variant of SUSurE (Speeded Up Surround Extrema) which has been proposed in [23].

In the above mentioned real-time application a blob detector is used to detect interest points in scale space. Blobs are regions whose grayscale value near the center is higher (or lower) than the surrounding pixels. The Laplacian of Gaussian function, or similar functions such as the Mexican hat function can be used to detect blobs. In the case of SUSurE, a binarized kernel is used to detect extremal values of the Laplacian of Gaussian function. The detector uses only a single filter operation performed on an integral image in the box filter variant of SUSurE.

Filter Response Evaluation: The kernel is particularly efficient to evaluate. While [13] showed that a Difference of Gaussians can be used to approximate the Laplacian of Gaussian, SUSure's approach is based on an even further going simplification. Fig. 2 shows the kernel used for the convolution, in particular the kernel used for searching extremal values of the Laplacian of Gaussian in scale space. The innermost square (corners e-f-g-h) has positive weights (here: +1), surrounded by a square (corners a-b-c-d) with negative weights (here: -1). The innermost square and the surrounding white region have the same surface. The outer hatched region does not need to be considered any more. The weights have been set to zero.

An integral image is a very efficient way to evaluate box filter responses [15]. Consequently an integral image is calculated as a first pre-processing step. Using integral images, one can easily evaluate the sum of (rectangular) image regions by simple pixel fetch.

In our case, we need to evaluate only two lobes in order to evaluate the filter response. We evaluate only a single digital filter. For each lobe, the four corners need to be evaluated. In total, only eight pixel fetches are needed to evaluate the complete filter response.

The filter response r of the blob filter is:

$$r = (e + d + g + b) - (a + c + f + h) \qquad\qquad (1)$$

Please note that the convolution operation is constant in time over all scales.

A scale pyramid may then be build using the filter responses. The filter responses are stored in a filter response pyramid. The pyramid consists of $n$ octaves. Each octave consists of $m$ intervals, i.e. $m$ different scales exist per octave. Within the first octave, all pixels in the integral image are evaluated. For the subsequent octave, a 1:2 subsampling in $x$- and $y$-direction is applied, in the next octave a 1:4 subsampling etc. This saves processing time and memory usage for the filter response images. Within an octave, the sampling remains constant for all intervals.

Regarding a search for local extrema, Fig. 3 illustrates a non-maximum suppression and local search for extremal values. After the filter responses have been evaluated, one searches for local extrema in the filter response images. All pixels in the convoluted images above a threshold $t$ are examined.

A neighborhood of 26 surrounding pixels is evaluated - 8 neighbors in the current scale, and 2x9 neighbors in the adjacent scales, i.e., the upper neighboring scale and the lower neighboring scale.

The search for local extrema can be efficiently implemented as proposed in [16].

Regarding an interest point localization, the local maxima which are above a threshold $t$ are now candidates for interest points. In the higher octaves, the sampling of the filter responses is coarser than in the lower octaves, with respect to the integral image. Therefore, an additional sampling will be performed in the example of the above mentioned real-time implementation for the filter response around candidate pixels in higher octaves.

An interpolation of the subpixel location of the interest point in scale and position may now be performed. The basic mechanism is to build a Taylor polynomial of second degree [12].

The interest point candidates are not numerically stable if they do not correspond to a well defined blob, but to a ridge-like structure. If the subpixel interpolation position has a distance of more than ½ pixel from the original integer pixel position, the interest point candidate is discarded.

An explicit edge rejection (as performed within the DoG search (Difference of Gaussian) used by SIFT [1]) is not performed here, but it can easily be introduced if required. However, our experience is that it is not necessary.

After the subpixel interpolation, the interest point has now a scale and position, which can later be used by the descriptor to define a suitable support region. Please note that we do not describe a rotational invariant detector here. Nevertheless, one can easily add support for rotational invariance by extracting the main gradient direction and "turn" the interest point (and later the support region) such that the direction points northwards. However, for many applications such as stereo matching with nearly rectified cameras, rotational invariance is not necessary.

At this point, one or more interest point(s) has/have been determined by the interest point detection. Embodiments deal with a subsequent task, namely the determination of a feature descriptor for a detected interest point. In particular, some embodiments propose a binarized descriptor which has a low memory usage and good matching performance. The descriptor is composed of binarized responses resulting from a set of folding operations applied to the normalized support region using a set of kernels. In the following description, first some aspects of the proposed feature description determination are briefly outlined, before a more detailed description is presented.

Most of the kernels are computed for different orientations. In total, 16 kernels are evaluated at 16 positions around the interest point resulting in 256 kernel responses.

The filter response to the kernels is now binarized. We describe three different binarization strategies. In the easiest way, only 1 bit per filter response is needed, in a more complex scenario 2 bits per filter response are used. Depending on the method chosen, all responses above a certain threshold **t** are set to 1, all others are set to 0, while the number of bits set to 1 can be normalized. This can be performed by choosing the threshold **t** such that a predefined number of bits are above the threshold.

The descriptor has consequently a dimension of 256 (512 when using 2 bits per filter response), but a size of only 32 (64) bytes. As comparison, SIFT uses 128 floating point numbers, resulting in a descriptor size of 4x128 = 512 bytes.

The matching process can now be performed very efficiently. Indeed only a binary *AND* operation needs to be performed in order to calculate the scalar product between two feature vectors. Subsequently the population count of the bits set to 1 is evaluated. Modern CPUs support the SSE4.2 instruction set [17]. This contains dedicated functions to evaluate the number of bits set of a 64 bit number, i.e. the population count. Only 4 (8) SSE executions are required to evaluate the scalar product of two possibly matching interest points. The matching operation only needs to calculate the Hamming distance which can be evaluated very efficiently on modern CPUs.

As already mentioned, embodiments relate to a new robust descriptor. A set of convolution operations may be performed on the support region of the interest point. In total 16 different kernel responses are evaluated on 16 positions within the support region. The 16 kernels represent basic geometric structures which correspond to corners, edges, ridges, blobs, and saddles. This explains the naming semantic kernels.

This results in 256 dimensions of the descriptor. However, the filter responses can be binarized. Consequently, despite the high descriptor dimension, only 256 bit, i.e. 32 bytes are needed. This may be particularly important or interesting, if an important number of interest point descriptors needs to be stored or transmitted over a network with limited bandwidth.

In addition, the matching can be performed very efficiently, as binary *AND* operations can be performed in order to evaluate the scalar product of two descriptors. Details of the matching process will be provided below.

A first step of the description process is to define the support region. The support region may be identical to the image section to be evaluated. Alternatively, the support region may be smaller than the image section. Furthermore, the support region may be defined at another scale than the image section or the original image. The support region is interpolated based on the subpixel position and scale of the interest point. If required, one can achieve rotational invariance by "turning" the support region such that the main gradient direction points northwards.

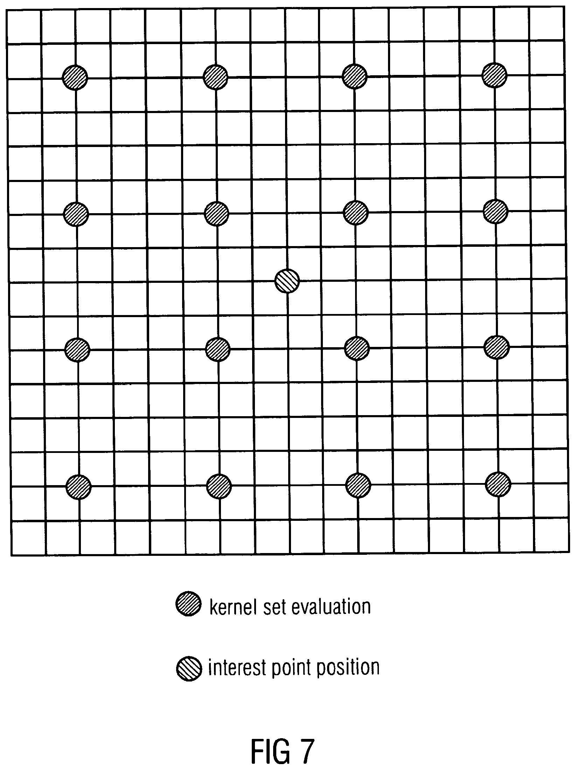

Two variants of the descriptor are proposed as examples (other variants are possible) and suitable support regions are illustrated in Figs. 4 and 7:

- Type A: support region of 12x12 pixel (Fig. 4) and overlapping kernel set evaluation regions, optimized for interest points with complex gradient structure in the center of the support region (e.g. corner detectors)

- Type B: support region of 16x16 pixel (Fig. 7) with equidistant and non-overlapping kernel set evaluation regions, optimized for interest points with uniform gradient structure, or (as for blob detectors) for interest points where most of the gradients occur at the border of the support region.

With respect to type A (overlapping kernel set evaluation regions), we will now describe the process of interest point description in detail. Let us assume, that an interest point has been detected and a normalized support region of 12x12 pixel around the interest point has been computed.

In Fig. 4, the interest point is at the center of the support region and indicated by a widely hatched dot. Positions within the support region where kernel set evaluations are performed are indicated by 16 densely hatched dots distributed within the support region. All kernels, or a subset of the kernels, are evaluated at the positions around the kernel set evaluation dots. For example, around each of the dots corresponding to a kernel set evaluation a number of 16 kernels will be evaluated. Please note that the kernels have a size of 4 x 4 pixels and that their respective evaluation regions may overlap.

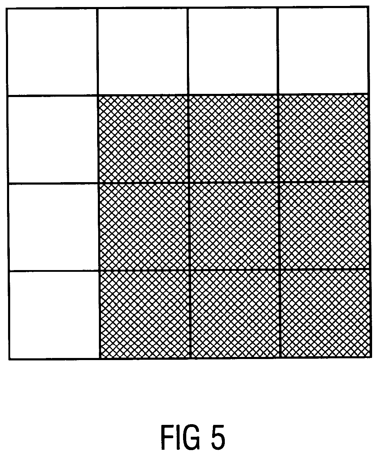

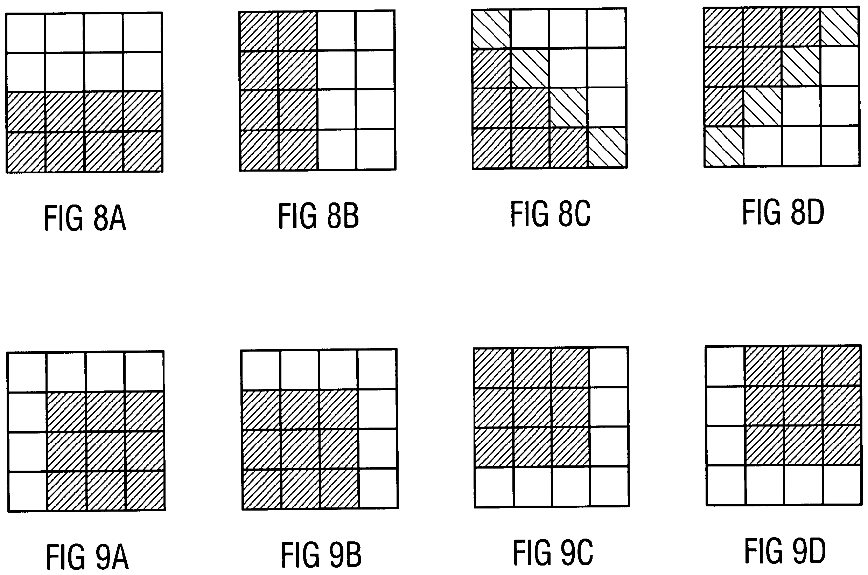

An example of a kernel is shown in Fig. 5, in the present case a corner-like kernel of size 4 x 4. All 16 kernels are shown in Figs. 8A to 11D.

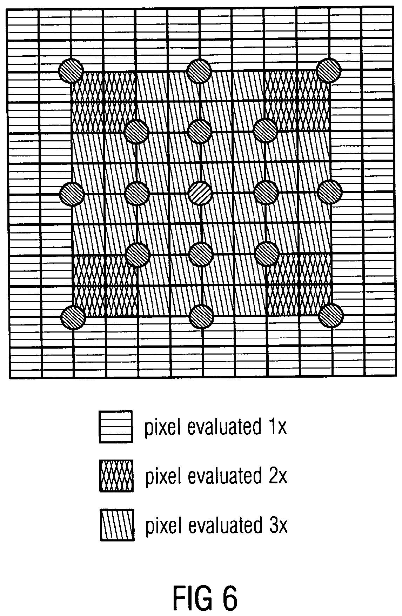

Apparently, the regions of evaluation overlap as the kernels have a size of 4x4 and some evaluation points are only two pixels apart. Some pixels contribute to one, two or, three evaluation points. Fig. 6 illustrates this behavior, i.e., the overlap of the kernel set evaluation regions. The inner region will be evaluated three times, the outer pixel only once. This approximates a Gaussian giving more statistical weight to the center pixels.

This type of description is suitable when the most important gradients are near the interest point. This is the case for region detectors or interest point detectors which search for corners, saddles, etc.

Fig. 7 illustrates the support region relative to type B (uniform kernel set evaluation regions) which is suitable for, e.g., blob detectors. In the case of blob detectors, one may opt to use a support region of 16 x 16 pixel. The sampling is now uniform and non-overlapping, i.e., equidistant and non overlapping regions for kernel set evaluation. Fig. 7 illustrates this type of support region. All 16 kernels are evaluated at the densely hatched dot positions. The kernels have a size of 4 x 4, thus, the evaluated regions do not overlap. In total, 256 filter responses are calculated.

The support region illustrated in Fig. 7 typically may be as large as the image section to be evaluated. As one possible definition of the image section, the image section for which the feature descriptor is determined, may be understood as corresponding to the union of evaluation regions projected onto the image. In other words, the image section contains those pixels of the image that contribute to the feature descriptor, i.e. those pixels that are evaluated when determining the feature descriptor. Typically, the image section is contiguous. Nevertheless, non-contiguous image sections are, in principle, possible.

Blobs do not have a complex gradient structure at the center. The important gradients lie at the border of the support region. This type of support region is more suitable when the descriptor is combined with a blob-based interest point (or region) detector. Just like in the type A version (Fig. 4), 16 kernels are evaluated at 16 positions resulting in 256 filter responses.

Figs. 8A to 11D illustrate various different kernels. Clearly, the represented kernels are to be regarded as examples, only. A pixel with no hatching has the value 0, for example. A pixel with a dense hatching has the value 1, for example. A pixel with a wide hatching has an intermediate value, e.g., 0.5. The support regions are convoluted using the 16 different kernels. All kernels represent a named geometric structure justifying the terminology of semantic kernels. Many kernels exist for different orientations. For instance, four main directions are evaluated among the edge-like kernels, as can be seen in Figs. 8A to 8D.

Figs. 8A to 8D show edge-like kernels. Four different main directions are evaluated. Note that in Figs. 8C and 8D the pixels of the main diagonal have an intermediate value, e.g., 0.5, as indicated by the wide hatching. Alternatively, the main diagonal of the semantic kernels illustrated in Figs. 8C and 8D may have the value 0 or 1, for example, so that the semantic kernels do not comprise any intermediary values but only two different values (for example, 0 and 1). In this manner, the semantic kernels may be expressed in a binary format or manner which may allow faster retrieval, easier storage, faster processing, etc.

Figs. 9A to 9D show corner-like kernels. The corners are assumed to be orthogonal and oriented along the rows and columns of the image. In alternative embodiments non-orthogonal corners and/or rotated corners may be used.

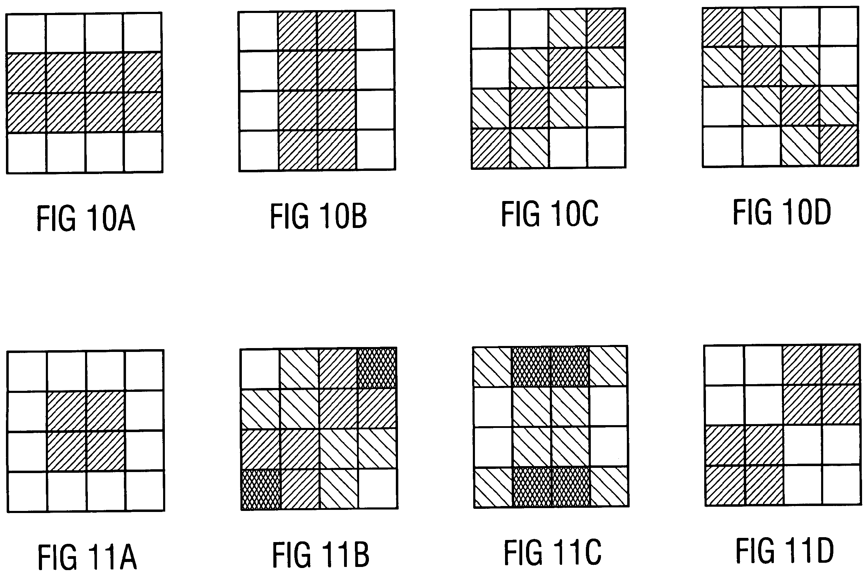

Figs. 10A to 10D show four different ridge-like kernels.

Fig. 11A shows a blob-like kernel and Figs. 11B to 11D show saddle-like kernels. The cross hatching in Figs. 11B and 11C may be interpreted as the highest value (e.g., 1). The dense hatching may be interpreted as a second highest value (e.g., 0.7), the wide hatching may be interpreted as a second lowest value (e.g., 0.3), and no hatching may be interpreted as the lowest value (e.g., 0).

After the kernels have been evaluated and corresponding filter responses have been obtained, a filter response binarization is performed. The filter responses resulting from the convolution with the semantic kernels can be binarized. There are three versions to perform this task.

A first variant (Variant A) produces a result with 256 bits. In the easiest way only the signum of the filter response is used. In that case, the descriptor has a dimension of 256 bits. It is not normalized, i.e., the number of bits which are set can differ from descriptor to descriptor. Matching can later be performed by evaluating the Hamming distance between two descriptors.

A second variant (Variant B) and a third variant (Variant B) produces a result with 512 bits. Variant B and C use 2 bits per filter response r to describe a tri-state situation. Three cases are distinguished: positive answer of high amplitude, positive or negative answer of low amplitude, and negative answer of high amplitude. The resulting bit pair $b$ depends on the filter response $r$ and the threshold $t$:

$$b = \begin{cases} 01: & r > t \\ 00: & -t \leq r \leq t \\ 10: & r < -t \end{cases}$$

In variant B, the threshold $t$ is fixed. This makes the computation faster, but also impairs the robustness against contrast changes. The descriptor is not normalized. The matching needs to evaluate the Hamming distance.

In variant C, the threshold $t$ is self-normalized. The aim is to normalize the number of bits set. We define a unit length $u$ to normalize the descriptor. The threshold $t$ is now chosen such that for each descriptor, exactly $u$ bits are set. Later matching can then be performed by evaluating the scalar product.

As we have 512 bits, representing a tri-state, the unit length *u* is calculated as follows:

$$u = \left\lceil \frac{512}{3} \right\rceil = 171$$

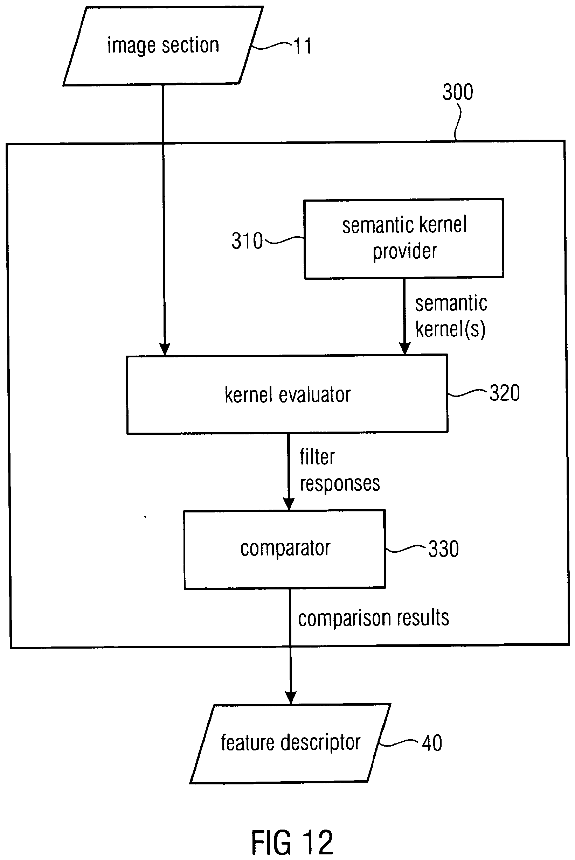

Fig. 12 shows a schematic block diagram of an apparatus 300, not being an embodiment of the present invention, for determining a feature descriptor of an image section 11. The image section 11 is typically a part or section of the image 10 (Fig. 1) and forms an input for the apparatus 300. The apparatus 300 comprises a semantic kernel provider 310, a kernel evaluator 320, and a comparator 330.

The image section 11 and one or more semantic kernels provided by the kernel provider 310 are the input parameters for the kernel evaluator 320. The kernel evaluator 320 typically determines one or more evaluation regions within the image section 11. Typically, the one or more evaluation regions are smaller than the image section 11. Alternatively, the one or more evaluation regions may have the same size as the image section 11. Typically, each evaluation region has the same size as the semantic kernel which is applied to the evaluation region. Two or more evaluation regions may overlap, or they may be adjacent to each other. When one of the semantic kernels is evaluated within the corresponding evaluation region, the kernel evaluator 320 may typically be configured to analyze a similarity between this semantic kernel and the portion of the image section 11 that is defined by the corresponding evaluation region. Such a similarity analysis may be achieved by several possible concepts. For example, a pixel-wise comparison between pixels of the semantic kernel and of the evaluation region within the image section 11 may be performed. Other alternatives for comparing a first image section and a second image section may also be employed. Note that one specific semantic kernel may be applied to several evaluation regions within the image section 11. Moreover, one specific evaluation region may be subject to the application of several different semantic kernels.

The application of a semantic kernel to the evaluation region at hand yields a filter response, because the semantic kernel may be regarded as a filter that is applied to the evaluation region within the image section. In this manner, typically a plurality of filter responses are obtained that result from applying the plurality of semantic kernels to one or more evaluation regions within the image section. Typically, each filter response may be an integer or a floating point number.

The plurality of filter responses are provided to the comparator 330 that compares each one of the plurality of filter responses with at least one threshold. Theses comparisons result in a plurality of comparison results. The comparison results are typically discrete and indicate the relation of the underlying filter response to the one or more thresholds. For example, each comparison result may be a binary value indicating whether the underlying filter response is greater than a single threshold or equal to/smaller than the single threshold.

The apparatus for determining the feature descriptor of the image section 11 produces an output in the form of the feature descriptor 40 which comprises the plurality of comparison results. The plurality of comparison results may be arranged in a bit vector.

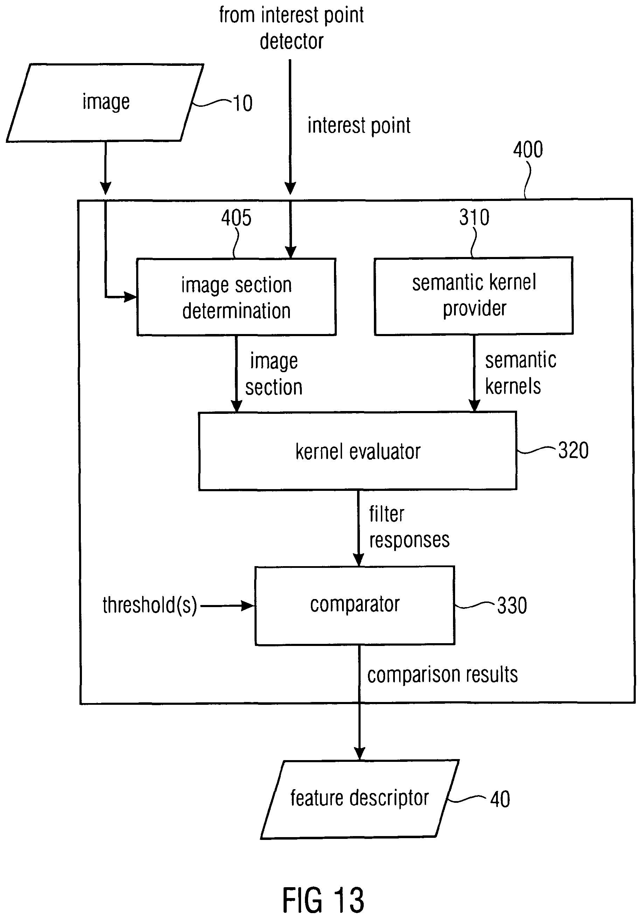

Fig. 13 shows a schematic block diagram of an apparatus 400 according to an embodiment. The apparatus 400 is configured to receive the image 10 and an interest point as input data. The apparatus 400 comprises an image section determination component 405 that is configured to process the image 10 and the information regarding the interest point to determine the image section. The information regarding the interest point is typically provided by an interest point detector (Fig. 1) and indicates a position of the interest point and a scale of the interest point. The scale of the interest point may typically indicate whether a structure of the image 10 around or in the vicinity of the interest point is rather coarse or rather fine. The image section determination 405 may exploit this information (e.g., interest point location and scale) when determining the image section.

The apparatus 400 further comprises the semantic kernel provider 310, the kernel evaluator 320, and the comparator 330. These components of the apparatus have already been described above in the context of Fig. 12 so that reference is made to the corresponding description.

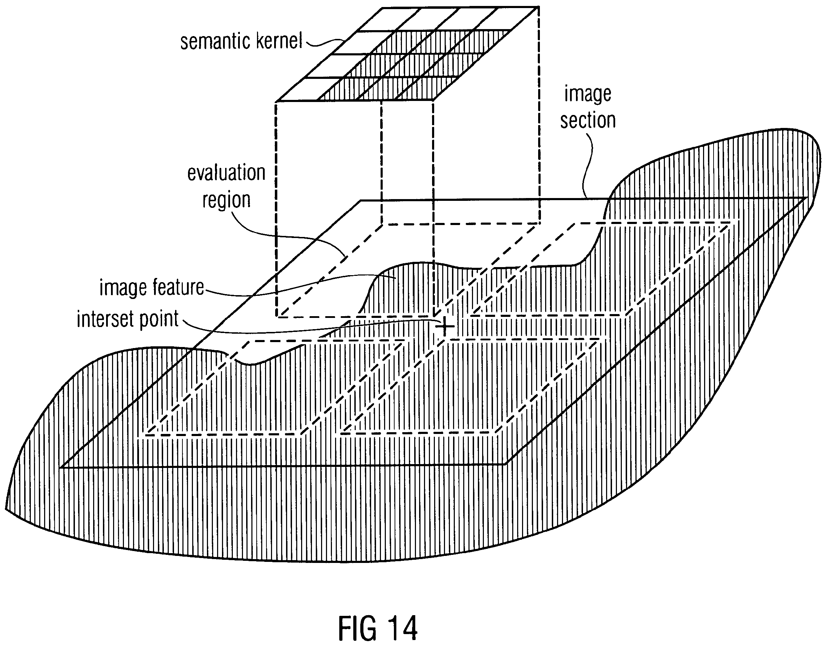

Fig. 14 schematically illustrates the interrelation between the image section 10, one evaluation region of the plurality of evaluation regions, and one semantic kernel of the plurality of semantic kernels. The image section is typically a portion of the entire image and may have been interpolated in order to account for the scale of the interest point. The image section is typically symmetrical to the interest point, i.e., the interest point is at the center of the image section.

As an example, four evaluation regions are illustrated within the image section in Fig. 14. Clearly, the number of evaluation regions and their arrangement within the image section is to be understood as an example, only. Indeed, only four evaluation regions are shown Fig. 14 for the sake of clarity. Other numbers and arrangements of evaluation regions are, of course, possible.

Fig. 14 also schematically illustrates a semantic kernel which is applied to the upper left evaluation region. As an example, the semantic kernel comprises a corner-like geometric structure which has a relatively good fit with the image feature that can be found within the evaluation region at hand. Consequently, it can be expected that the filter response will indicate a relatively high similarity between the semantic kernel and the content of the image that is contained in the evaluation region.

Subsequently, the same corner-like semantic kernel may also be applied to the three other evaluation regions. However, the resulting filter responses can be expected to indicated somewhat lower degrees of similarity.

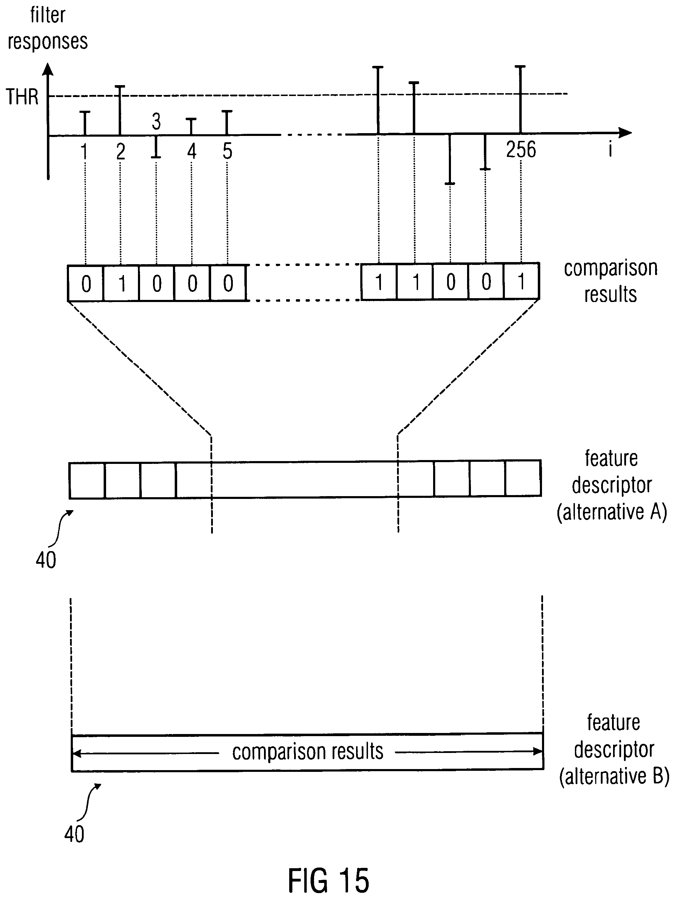

Fig. 15 schematically illustrates a processing of filter responses. The upper diagram in Fig. 15 schematically represents 256 filter responses. The filter responses may, for example, be signed integers. A threshold THR used by the comparator 330 (Figs. 12 and 13) is also schematically indicated in the upper diagram of Fig. 15. Some of the filter responses are greater than the threshold THR. The comparator 330 produces binary comparison results, i.e., a 256 bit vector, which is schematically represented in Fig. 15. A bit of the bit vector is set to "1" when the corresponding filter result is greater than the threshold and to "0" in all other cases. Please note that this choice of determining the comparison results is an example, only, and that various other options exist for determining the comparison results exist. In particular, each filter response may result in one or two bits.

Fig. 15 further illustrates an alternative A and an alternative B for the feature descriptor 40.

According to the alternative A, the bit vector determined by the comparator may form a portion of the feature descriptor 40 and the entire feature descriptor in addition comprises further information relative to the image section surrounding the interest point. According to the alternative B, the comparison results constitute the feature descriptor 40.

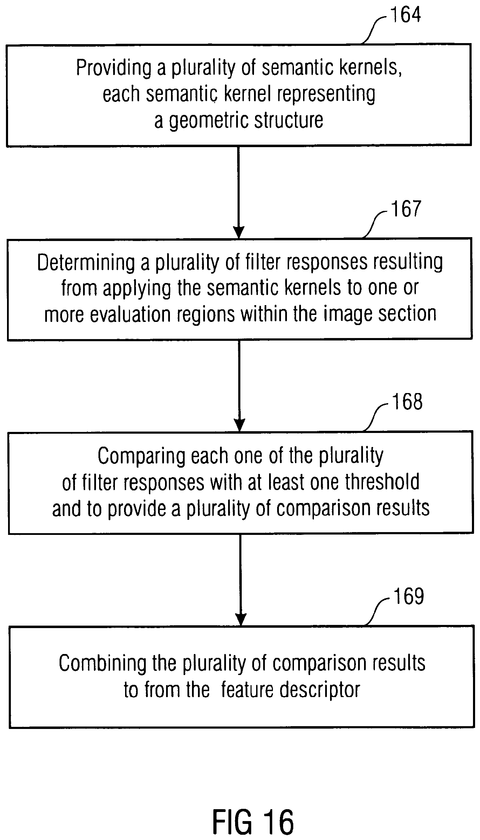

Fig. 16 shows a schematic flow diagram of a method for determining a feature descriptor for an image section according to embodiments. At a step 164 a plurality of semantic kernels are provided. Each semantic kernel represents a geometric structure. The geometric structures are edges, ridges, corners, blobs, or saddles A plurality of filter responses is then determined at a step 167 that result from applying the semantic kernels to one or more evaluation regions within the image section. For example, a similarity between the semantic kernel and the image within the evaluation region may be determined. As indicated at a step 168, each one of the plurality of filter responses is compared with at least one threshold and a plurality of comparison results is provided.

At a step 169 the plurality of comparison results are combined to form the feature descriptor 40.

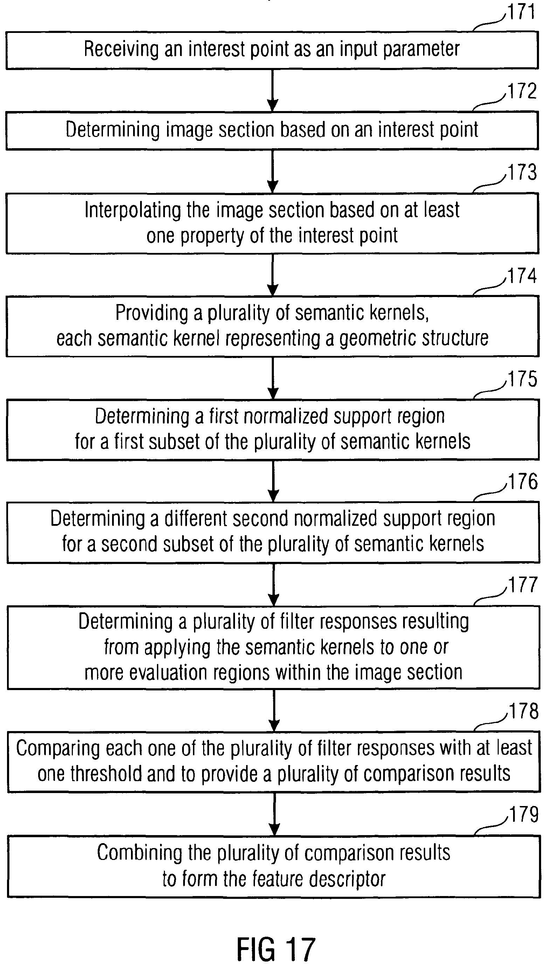

Fig. 17 shows a schematic flow diagram of a method for determining a feature descriptor for an image section according to further embodiments. An interest point is received as an input parameter at a step 171. As indicated at step 172, an image section is determined based on an interest point. For example, the image section may a rectangular section of the image that is centered at the location of the interest region. At a step 173 the image section is interpolated based on at least one property of the interest point. The at least one property of the interest point may a scale of the interest point.

A plurality of semantic kernels is provided at a step 174. Each semantic kernel represents a geometric structure.

At a step 175 a first normalized support region is determined for first subset of the plurality of semantic kernels. In a similar manner a second normalized support regions is determined for a second subset of the plurality of semantic kernels at a step 176. The support regions are typically associated to the image section. The first normalized support region may have a size different from the second normalized support regions. For example, the first normalized support region may have the size of the image section, whereas the second normalized support region may have a smaller size (e.g., 4 pixels less wide and/or large).

Note that the semantic kernels may have different sizes, as well. Moreover, some types of semantic kernels may be more appropriate for overlapping evaluation regions, whereas other types may be more appropriate for non-overlapping evaluation regions. In addition to the first and second normalized support regions, further normalized support regions may be determined for further subsets of the semantic kernels. The normalized support regions are referred to as normalized because they are adjusted to the properties of the semantic kernels, such as size (in pixels) and scale.

At a step 177 a plurality of filter responses are determined, the plurality of filter responses resulting from applying the semantic kernels to one or more evaluation regions within the image section. In particular, each semantic kernel is applied to an evaluation region within the corresponding support region of the first normalized support region and the second normalized support regions.

Each one of the plurality of filter responses are compared with at least one threshold in order to determine and provide a plurality of corresponding comparison results, as indicated at a step 178 of the method for determining the feature descriptor. Then, at a step 179, the plurality of comparison results are compared to form the feature descriptor.

One of the interesting properties of the proposed feature descriptor is the fast matching ability. Matching is typically based on a matching norm, or uses a matching norm. The descriptors are, for example, binary numbers. Consequently the scalar product which is needed for a correlation matrix can be computed very efficiently as well as the Hamming distance between two descriptors.

To evaluate the scalar product $s$, a binary **AND** is performed between the feature vectors $a$ and $b$. Subsequently, the number of bits set is evaluated, namely the population count:

$$s = pop_{count(a \wedge b)}$$

The scalar product can be computed if the length of the feature vector is normalized as it is the case for binarization variant C.

The Hamming distance *h* between the feature vectors *a* and *b* is calculated using the binary *XOR* and subsequent evaluation of the population count:

$$s = pop_{count(a \vee b)}$$

The Hamming distance can be computed when the length of the feature vector is not normalized as it is the case for binarization variant A and B.

Modern CPUs support SSE4.2 [17] which has dedicated instructions to calculate the *population count*. The CPU instruction *pop_cnt64* evaluates the population count of a 64 bit number. Only eight executions of this instruction are needed for the 512 dimensional feature vector (variant C) and only 4 executions are needed for a 256 dimensional feature vector (variants A and B).

Additional matching constraints may apply. The best matching feature vector (variants B and C: lowest Hamming Distance, variant A: highest scalar product) is compared to the second best. To achieve better matching results, we demand that scalar product of the best match is *s* times higher than the second best match. If the Hamming distance is evaluated, we demand that the lowest distance is *s* times lower than the second lowest distance.

A number of comparison tests has been conducted order to evaluate the proposed feature descriptor. In a first test, two variants of the proposed semantic kernels binarized descriptor with 165 bits and 170 bits, respectively, have been compared to a cross correlation-based approach, GLOH, and SIFT. In a second test the three variants of the SKB descriptor are compared using the evaluation framework and dataset used in [4]. The data set is available at http://www.robots.ox.ac.uk/~vgg/research/affine.

Subsequently, the fastest SKB variant has been compared with the BRIEF-256 descriptor [18] to compare the recall rate and the processing time of the description process.

In a last test the runtime of a stereo matching application and its detection quality in a real-time environment was evaluated.

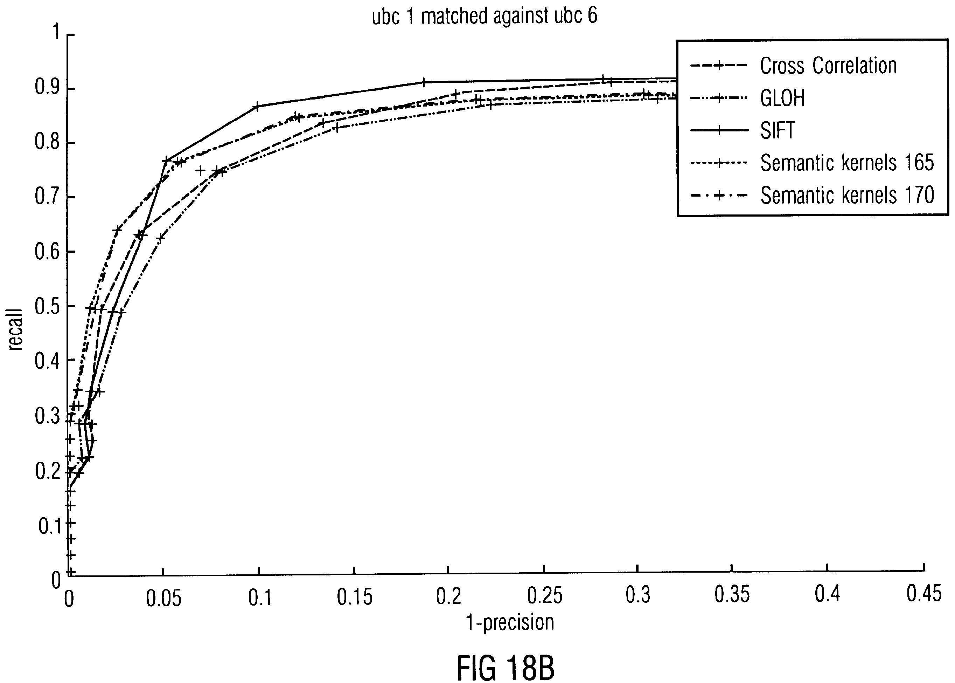

The results of the first test are shown in Figs. 18A and 18B. Fig. 18A shows a graph of the recall of the various feature descriptors as a function of 1 - precision (i.e., "one minus precision", that is, the complementary precision) for two test images named "bikes 1" and "bikes 6". Two variants of the semantic kernels binarized feature descriptor ("Semantic kernels 165" and "Semantic kernels "170") are compared to cross correlation, GLOH, and SIFT. It can be seen that in particular the variant "Semantic kernel 165" outperforms the GLOH descriptor and the SIFT descriptor in the upper left corner of the graph, i.e., in the region which corresponds to high recall (approximately between 0.8 and 0.9) combined with high precision (1-precision being approximately between 0.1 and 0.2, which translates to a range of the precision between 0.8 and 0.9).

Fig. 18B shows the results of a similar test for two test images "ubc 1" and "ubc 2". For a recall value of approximately 0.75 the performance of the two SKB variants is comparable to the performance of the SIFT descriptor, as the SIFT curve intersects the two SKB curves, namely "Semantic kernels 165" and "Semantic Kernels 170". The two SKB variants perform better than the SIFT descriptor for a range of high precision values, however at the cost of a reduced recall performance (see 1-precision range from approximately 0.01 to 0.05 and recall range from approximately 0.3 to 0.7 in the graph of Fig. 18B).

In a second test the three variants of the SKB descriptor (i.e., variant A, variant B, and variant C) were compared with GLOH, SIFT, and Cross Correlation using the test framework provided in [4].

As region detector the Hessian-Laplace detector was chosen which is part of the region detectors provided in the test framework. We chose four images from the data set which do not require rotational invariance as we intended to use the descriptor for matching feature points in nearly rectified stereo images.

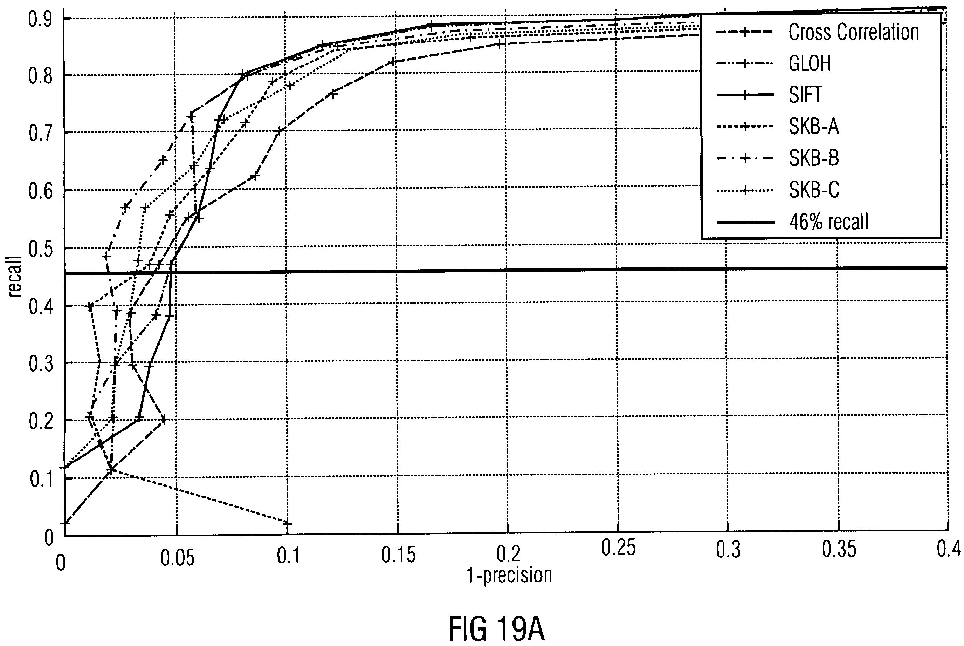

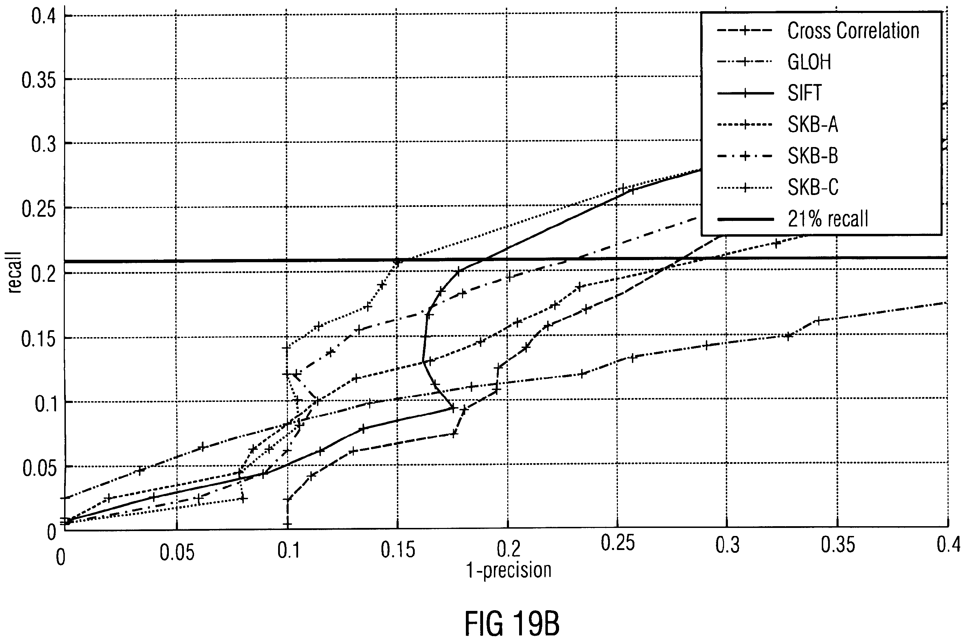

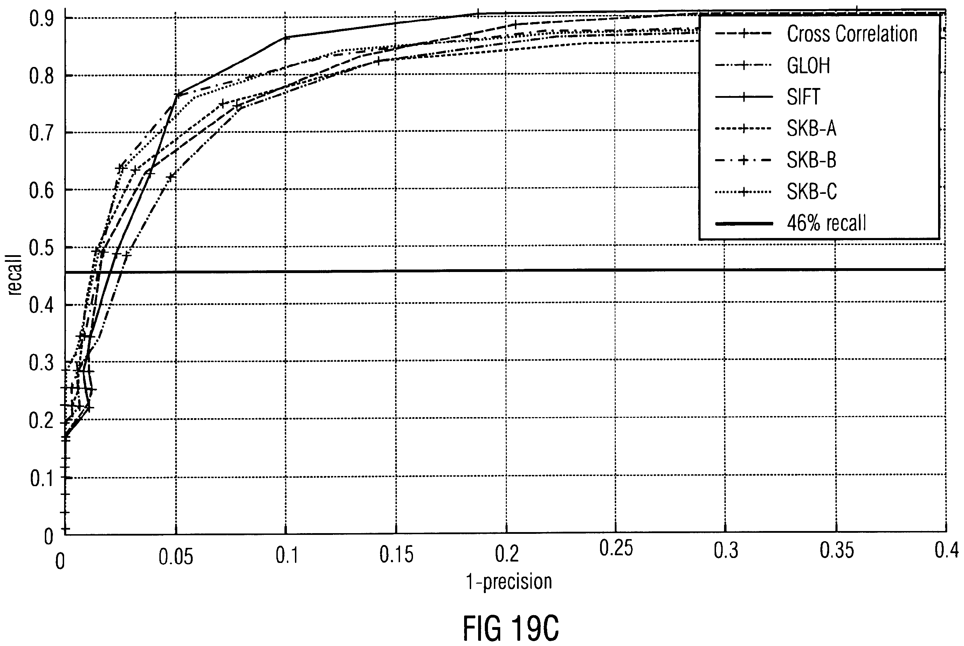

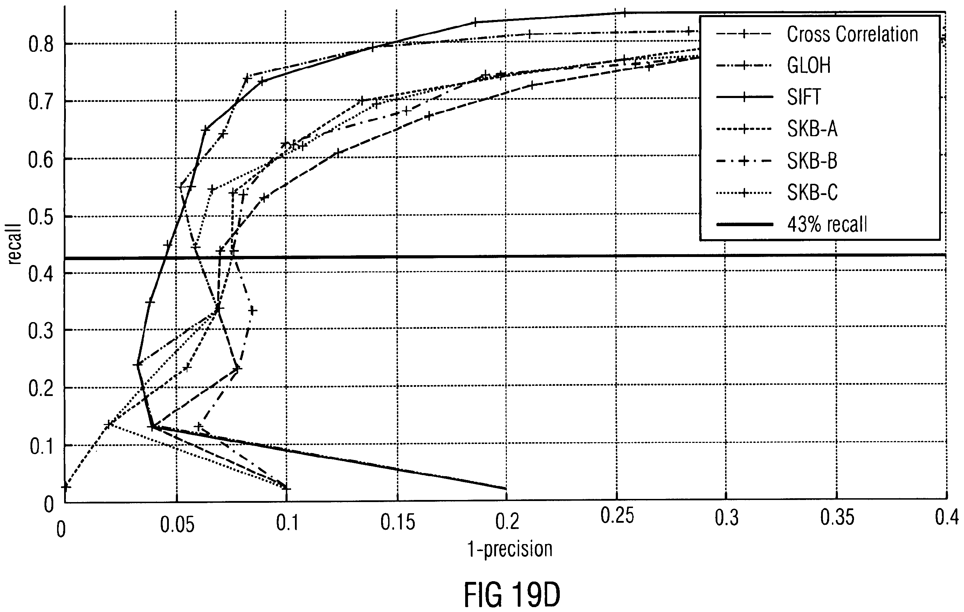

Figs. 19A to 19D show the results of this performance evaluation according to the second test. For all test images, image 1 has been matched with the respective image 6, which shows the strongest artifacts, i.e., Blur for the *Bikes* and *Trees* images (Figs. 19A and 19B, respectively), Jpeg compression for the *UBC* image (Fig. 19C), and illumination change for the *Leuven* image (Fig. 19D).

Fig. 19A shows the results of a test performed on first test set of image, namely the test set "Bikes" which shows an increasing amount of blur from image 1 to image 6. The three variants SKB-A, SKB-B, and SKB-C have a similar performance. They show a particularly good performance at low thresholds compared to SIFT, GLOH, and Cross Correlation. At a recall rate of 46% which is half of the maximum recall rate, SKB-B has the highest precision, i.e. the fewest outliers.

Fig. 19B shows the results for a test performed on a second test set of images, namely the test set "Trees" which also shows an increasing amount of blur from image 1 to image 6. The three variants SKB-A, SKB-B, and SKB-C have a similar performance. They show a particularly good performance at low thresholds compared to SIFT, GLOH, and Cross Correlation. At a recall rate of 21% which is half of the maximum recall rate, SKB-C has the highest precision, i.e. the fewest outliers.

Fig. 19C shows the results of a test performed on a third test set of images, namely the test set "UBC" which shows increasing Jpeg compression artifacts from image 1 to image 6. The three variants SKB-A, SKB-B, and SKB-C have a similar performance. They show a particularly good performance at low thresholds compared to SIFT, GLOH, and Cross Correlation. At a recall rate of 46% which is half of the maximum recall rate, SKB-A has the highest precision, i.e. the fewest outliers.

Fig. 19D shows the results of a test performed on a fourth test set of images, namely the test set "Leuven" which shows increasing illumination changes from image 1 to image 6. The three variants SKB-A, SKB-B, and SKB-C have a similar performance. They perform better than Cross Correlation, but worse than SIFT and GLOH. At a recall rate of 43% which is half of the maximum recall rate, SIFT has the highest precision, i.e. the fewest outliers. GLOH and SKB-C have the same precision at that recall rate.

The descriptor shows a very high precision when the threshold is chosen to reproduce a recall rate around 50% of the maximum recall rate. For applications such as stereo matching and calibration purposes, it is typically important to have a low outlier rate while a reasonable number of feature points is sufficient for this task. In other words, our aim is not to maximize the recall for high 1-precision values, but to maximize the precision at a given recall rate. For our tests, we chose 50% of the maximum recall rate as target value.

One can observe that the three variants A, B, and C show strong results at low thresholds for the nearest neighbour matching. In that scenario, the precision is high compared to other descriptors (*Bikes, UBC, Trees*). However, in the test image *Leuven,* which tests for strong illumination changes, other descriptors show a better performance.

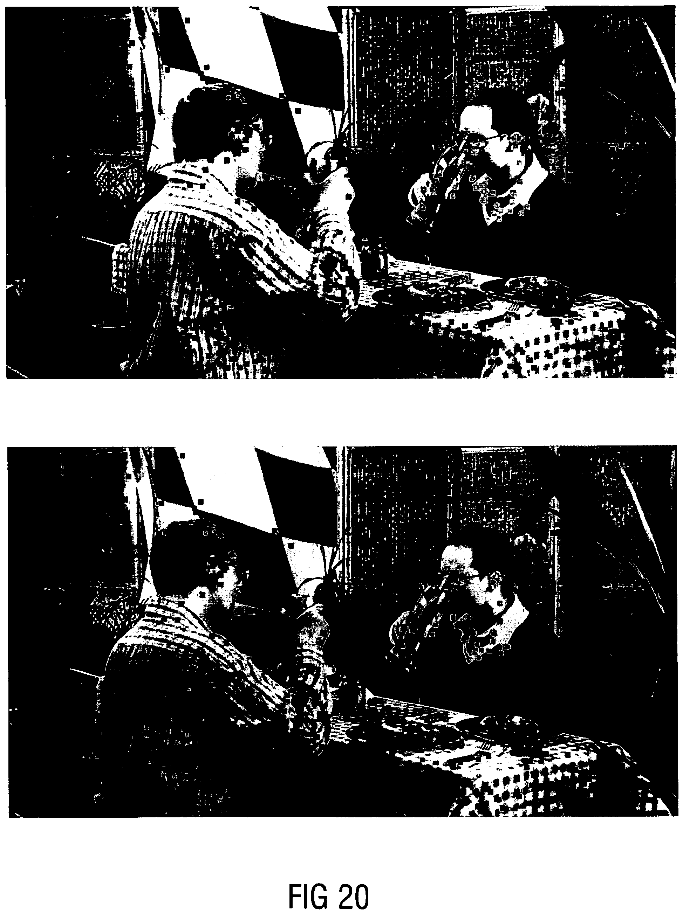

Real-time capabilities of the feature descriptor in a stereo matching environment are demonstrated in Fig. 20 and the following associated description. In particular, in a third test the SKB descriptor was used for a real-time stereo matching application. The video resolution was 960x540 pixels, the frame-rate was 25 Hz, i.e., 40 ms were available for the complete detection, description, and matching process.

A single screenshot is shown in Fig. 20. The screenshot comprises a left image and a right image acquired by a stereo camera or by two cameras. Around 3000 interest points were described per frame and camera, resulting in 600 consistent matches in average. The matching was performed using a left-right consistency check (i.e. matching twice). One can see in Fig. 20 that the scene contains objects in different distances to the stereo camera. In the original color image, the matched feature points are coloured according to their horizontal disparity, brown for near objects, blue for far objects in blue. The original color images can be seen as Fig. 15 of the article published under the web address http://iphome.hhi.de/eisert/papers/cvmp2011.pdf. From the original color version of Fig. 20 it is apparent that no outliers are visible.

After the matching, a RANSAC (Random Sample Consensus) algorithm was used to estimate the fundamental matrix and to subsequently eliminate outliers according to [3]. Table 1 shows the time consumption of the real-time matching application running on an Intel Xeon X5680 CPU at 3.33 GHz. The CPU has 6 cores plus 6 cores via hyper threading. The matching was performed using all CPUs, while the interest point detection and description was performed on 2 cores (one per camera). The interest point description was performed on every second pixel, but the full resolution was used for the pixel position interpolation.

*Table 1:*

| Processing Step | Runtime in ms |
|-----------------|---------------|
| Integral Image | 2 |
| Binarized LoG | 12 |
| SKB Descriptors | 3 |
| Matching | 12 |
| RANSAC | 8 |
| **Total** | **37** |

Table 1 shows the runtime of the different image processing steps. At 25 Hz, an image pair needs to be processed within 40 ms. Accordingly, Table 1 shows that the real-time requirement was met within the stereo matching application. The description process and the matching needed 12 ms each. The description could be speeded up when using more than 2 CPUs for the process. However, even in this configuration, the stereo matching application ran fast enough for 25 fps.

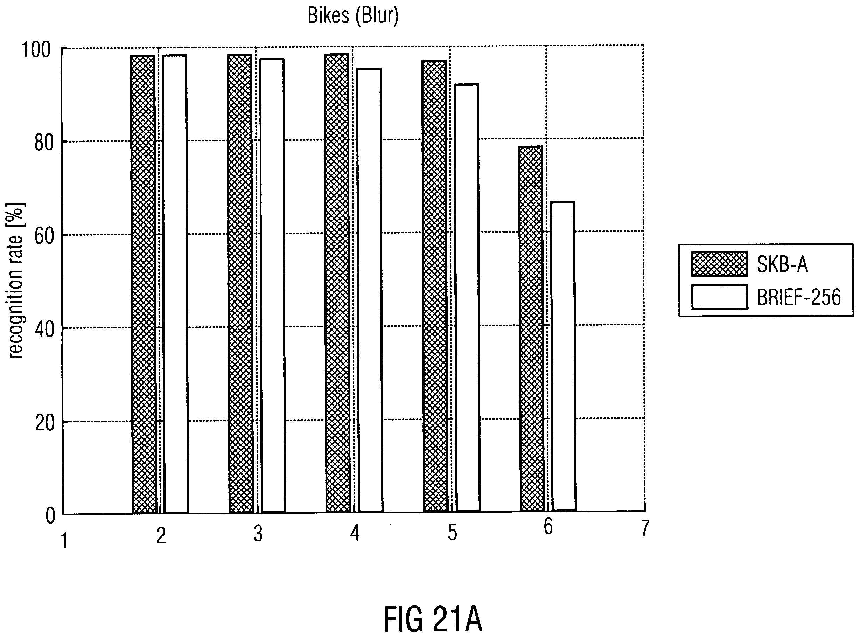

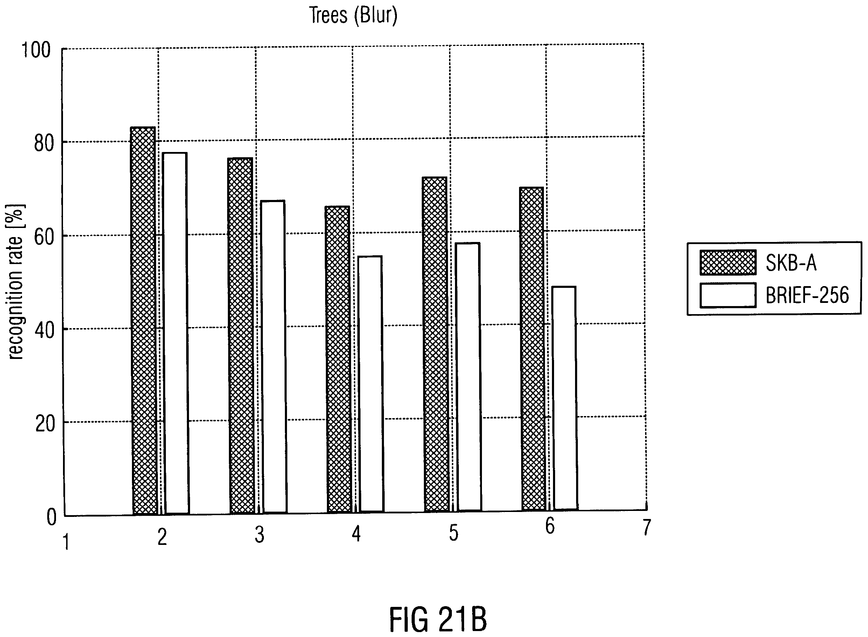

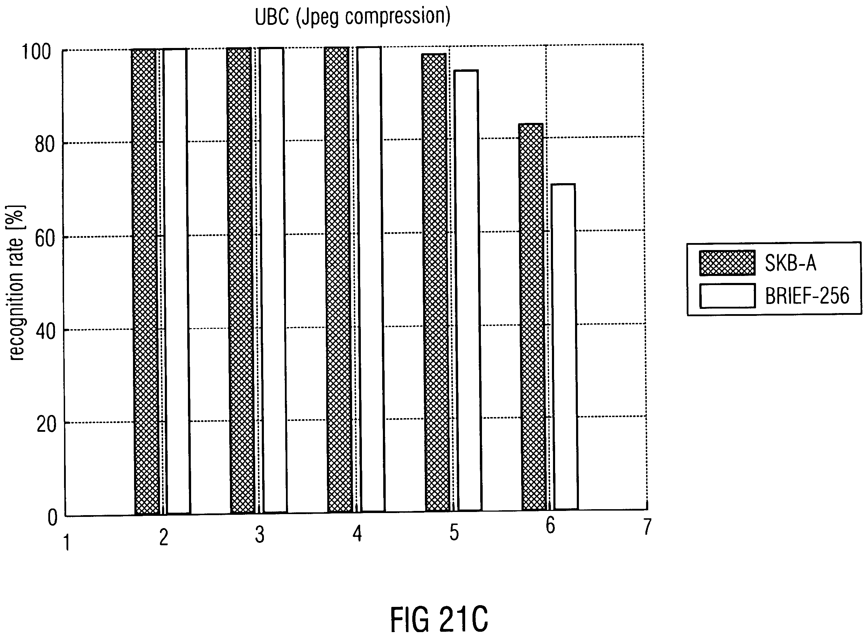

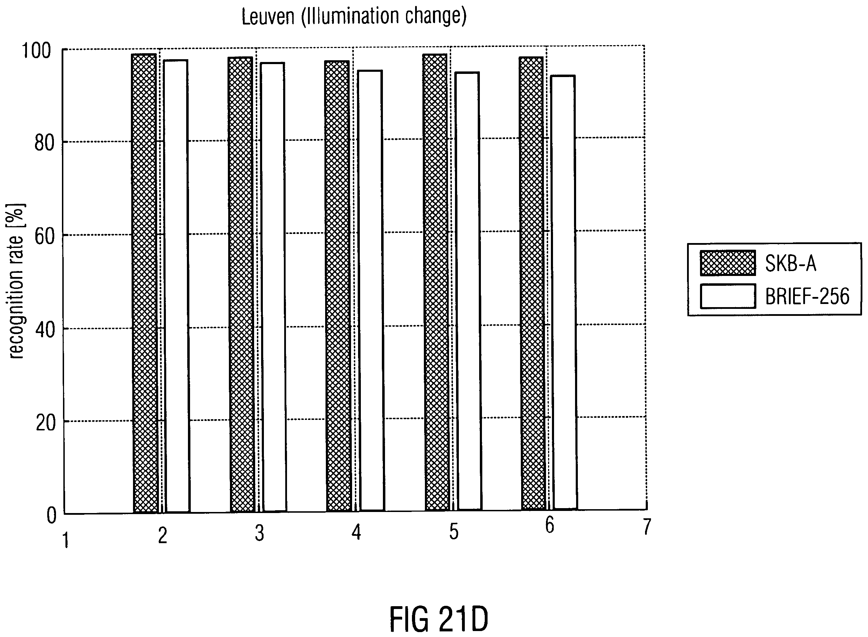

In a fourth test, the results of which are illustrated in Figs. 21A to 21D, the fastest SKB variant (SKB-A) was compared with the OpenCV 2.2 implementation of BRIEF-256 as described in [18]. Both descriptors use 256 Bit and can be matched using a Hamming distance matcher. The SKB-A descriptor is compared to the BRIEF-256 descriptor using four image series. Each of the image series consists of 6 images, resulting in 5 pairs, i.e. image 1 is matched against the images 2 to 6. SKB-A shows a higher recall rate for all images. We performed a test where the recall rate was calculated for both descriptors using images provided in [4]. For different image pairs, the SURF detector [2] was used to detect interest points for the first image. Subsequently, this interest point was transferred using a ground truth homography into the second image. This approach is also performed in [18]. The homographies and images are part of the test framework provided in [4].

In the next step, the interest points were described using SKB-A and BRIEF-256. In a last step, the feature points were matched using a nearest neighbor matcher. Due to the ground truth homography, one can examine the rate of correct and false matches.

For each image set, image 1 is subsequently matched against the images 2, 3, 4, 5, and 6. The image degradation (blur, illumination change, Jpeg compression) increases within each set. Consequently, the recall rate for the comparison between image 1 and 2 is higher than the comparison between image 1 and 6. The result is illustrated in Figs. 21A to 21D. As one can see, the recall rate is higher for SKB in all cases.

We compared the runtime of SKB-A, SIFT, SURF, and BRIEF-256 descriptors when describing 8372 feature points (Table 2). For SIFT, SURF and BRIEF the OpenCV 2.2 implementation was used using a single CPU at 3.33 GHz. The matching process was not compared, as it is identical between BRIEF-256 and SKB-A.

Table 2:

| Descriptor | Runtime in ms |
| --- | --- |
| SIFT | 2959 |
| SURF | 457 |
| BRIEF-256 | 42 |
| SKB-A (incl. Integral Image) | 24 |
| SKB-A | 17 |

Table 2 shows the runtime of different descriptors. 8375 feature points needed to be described. SKB-A performs the fastest even when the calculation of the integral image is included. Without counting the time for the integral image, it runs around 2.5 times faster than BRIEF-256. Table 2 shows the result of the runtime comparison. SKB-A performs the fastest with 24 ms for 8372 feature points, including the time required for the computation of the integral image. If the integral image is already available (e.g. already computed by the interest point detector) SKB-A needs only 17 ms.

In the foregoing description, a new feature descriptor is proposed which showed strong results at low outlier rates. Its suitability in terms of robustness and speed were demonstrated in a comparison with the BRIEF descriptor as well as the SIFT and GLOH descriptor. Moreover, the SKB was successfully used within a real-time stereo matching environment, underlying its suitability for real-time image processing applications.

Thus, the above described embodiments provide robust feature detection and/or description, or search or correspondence point in two or more camera views.

- Search for correspondence points in stereo matching
- Camera calibration
- Object detection (from data base)

Specific, possibly interesting properties of these embodiments may be:

- Short matching time
- High number of correct matches when a particularly low outlier ratio is required
- Possibility of storing and transmitting only small amounts of data

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a pro grammable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

The computer program can be stored on a data carrier (or a digital storage medium, or a computer-readable medium) comprising, recorded thereon, the computer program for performing one of the methods described herein. The data carrier, the digital storage medium or the recorded medium are typically tangible and/or non-transitionary.

It is also possible to generate a data stream or a sequence of signals representing the computer program for performing one of the methods described herein. The data stream or the sequence of signals may for example be configured to be transferred via a data communication connection, for example via the Internet.

A computer, or a programmable logic device, can be configured to or adapted to perform one of the methods described herein.

A computer can have installed thereon the computer program for performing one of the methods described herein.

An apparatus or a system can be configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver .

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

It is further to be noted that methods disclosed in the specification or in the claims may be implemented by a device having means for performing each of the respective steps of these methods.

Furthermore, in some embodiments a single step may include or may be broken into multiple sub steps. Such sub steps may be included and part of the disclosure of this single step unless explicitly excluded.

**References**

[1] D. Lowe, Distinctive image features from scale invariant keypoints. In IJCV, 60(2):91-110, 2004.

[2] Herbert Bay, Andreas Ess, Tinne Tuytelaars, Luc Van Gool, SURF: Speeded Up Robust Features, Computer Vision and Image Understanding (CVIU), Vol. 110, No. 3, pp. 346--359, 2008.

[3] Hartley, R. and Zisserman, A. 2000. Multiple view geometry in computer vision, Cambridge University Press: Cambridge, UK.

[4] K. Mikolajczyk and C. Schmid. A performance evaluation of local descriptors. PAMI, 27(10):1615-1630, 2005.

[5] K. Mikolajczyk, T. Tuytelaars, C. Schmid, A. Zisserman, J. Matas, F. Schaffalitzky, T. Kadir and L. Van Gool, A comparison of affine region detectors. In IJCV 65(112):43-72, 2005.

[6] K. Mikolajczyk and C. Schmid, Scale and Affine invariant interest point detectors. In IJCV, 60(1):63-86, 2004.

[7] T. Lindeberg, "Feature Detection with Automatic Scale Selection," Int'l J. Computer Vision, vol. 30, no. 2, pp. 79-116, 1998.

[8] J. Matas, O. Chum, M. Urban, and T. Pajdla, Robust wide baseline stereo from maximally stable extremal regions. In BMVC, p. 384-393, 2002.

[9] T. Tuytelaars and L. Van Gool, Matching widely separated views based on affine invariant regions . In IJCV, 59(1):61-85, 2004.

[10] T. Kadir, A. Zisserman, and M. Brady, An affine invariant salient region detector. In ECCV, p. 404-416, 2004.

[11] C. Harris and M. Stephens. A combined corner and edge detector. In Proceedings of the Alvey Vision Conference, pages 147-151, 1988.

[12] M. Brown and D. Lowe. Invariant features from interest point groups. In BMVC, 2002.

[13] D. Lowe. Object recognition from local scale-invariant features. In ICCV, 1999.

[14] Y. Ke and R. Sukthankar. PCA-SIFT: A more distinctive representation for local image descriptors. In CVPR (2), pages 506-513, 2004.

[15] P.A. Viola and M.J. Jones. Rapid object detection using a boosted cascade of simple features. In CVPR (1), pages 511 - 518, 2001.

[16] A. Neubeck and L. Van Gool. Efficient non-maximum suppression. In ICPR, 2006.

[17] Intel Corporation, Intel SSE4 Programming Reference. Reference Number: D91561-001, April 2007.

[18] M. Calender, V. Lepetit, and P. Fua. BRIEF: Binary Robust Independent Elementary Features. In Proceedings of the European Conference on Computer Vision, 2010.

[19] J. Ventura, T. Höllerer. Fast and Scalable Keypoint Recognition and Image Retrieval Using Binary Codes. In IEEE Workshop on Motion and Video Computing (WMVC), 2011.

[20] J. Brandt, Transform coding for fast approximate nearest neighbor search in high dimensions. In IEEE Conference on Computer Vision and Pattern Recognition (CVPR), 2010, pp. 1815-1822.

[21] V. Chandrasekhar, G. Takacs, D. M. Chen, S. S. Tsai, R. Grzeszczuk, Y. Reznik, and B. Girod. Compressed histogram of gradients: A low bitrate descriptor. In Int. J. Comput. Vis. (Special Issue on Mobile Vision), May 2011, pp. 1-16.

[22] M. Stommel. Binarising SIFT-Descriptors to Reduce the Curse of Dimensionality in Histogram-Based Object Recognition. In International Journal of Signal Processing, Image Processing and Pattern Recognition Vol. 3, No. 1, March, 2010.

[23] Ebrahimi, M., & Mayol-Cuevas, W. (2009). SUSurE: Speeded up surround extrema feature detector and descriptor for realtime applications. In Workshop on feature detectors and descriptors: the state of the art and beyond. IEEE conference on computer vision and pattern recognition (CVPR), 2009.

**Claims**

1. Apparatus (400) for determining a feature descriptor (40) of an image section, wherein the image section is determined based on an interest point that is provided as an input parameter to the apparatus, the apparatus being configured to receive information regarding a position and a scale of the interest point and to determine the image section based on the position of the interest point, comprising:

a semantic kernel provider (310) configured to provide 16 semantic kernels, each semantic kernel representing a geometric structure being selected out of a group consisting of: edges, ridges, corners, blobs, and saddles; an interpolator configured to obtain a support region by interpolating the image section based on the scale of the interest point, a kernel evaluator (320) configured to determine 256 filter responses resulting from applying the semantic kernels to 16 evaluation regions located within the support region; and a comparator (330) configured to compare each one of the filter responses with at least one threshold and to provide a plurality of comparison results, wherein the feature descriptor comprises the plurality of comparison results, wherein each of the plurality of comparison results is represented by one bit or by two bits, wherein the apparatus (400) further comprises a feature descriptor generator configured to combine the plurality of comparison results to form at least a portion of the feature descriptor by using the plurality of comparison results to form one or more bytes of the feature descriptor, and wherein the feature descriptor has a dimension of 256 and a size of 32 bytes, or a dimension of 512 and a size of 64 bytes, respectively.

2. Apparatus according to claim 1, wherein the information regarding the position of the interest point is information regarding a subpixel position of the interest point.

3. Apparatus according to any one of claims 1 or 2, wherein at least one of the kernels has an innermost region having positive weights, the innermost region being surrounded by a region with negative weights, both regions having the same surface and a square outer shape.

4. Apparatus according to claim 3, wherein an outer region with respect to the square with the negative weights has the weights being set to zero.

5. Apparatus according to any one of claims 1 to 4, wherein at least two evaluation regions overlap in a portion of the image section.

6. Apparatus according to any one of claims 1 to 5, wherein the comparator is configured to determine, as the comparison result, a bit pair for each one of the plurality of filter responses, wherein a value of the bit pair represents a relation of the corresponding filter response to the at least one threshold and a second threshold, and wherein the feature descriptor has a dimension of 512 and a size of 64 bytes.

7. Apparatus according to any one of claims 1 to 6, wherein the comparator is further configured to adjust the at least one threshold so that a predetermined number of filter responses exceed the threshold.

8. Apparatus according to any one of claims 1 to 7, wherein the feature descriptor is formed by binary numbers.

9. Apparatus according to any one of claims 1 to 8, wherein each semantic kernel is expressed by at most four different values.

10. Method for determining a feature descriptor of an image section, the method comprising:

receiving (171) an interest point as an input parameter, receiving information regarding a position and a scale of the interest point; determining (172) an image section based on the position of the interest point; interpolating (173) the image section based on the scale of the interest Z point to obtain a support region, providing (174) 16 semantic kernels, each semantic kernel representing a geometric structure selected out of a group consisting of edges, ridges, corners, blobs, and saddles determining (175, 176) a support region for the semantic kernels, wherein the support region is adjusted to the properties of the semantic kernels, such as size (in pixels) and scale; determining (177) 256 filter responses resulting from applying the semantic kernels to 16 evaluation regions located within the support region, wherein determining the plurality of filter responses comprises applying the semantic kernels to the evaluation regions, comparing (178) each one of the filter responses with at least one threshold and to provide a plurality of comparison results; and

combining (179) the plurality of comparison results to form the feature descriptor, wherein the feature descriptor has a dimension of 256 and a size of 32 bytes, or a dimension of 512 and a size of 64 bytes, respectively.

11. Method according to claim 10, wherein the information regarding the position of the interest point is information regarding a subpixel position of the interest point.

12. Method according to any one of claims 10 to 11, wherein each of the plurality of comparison results is represented by one bit or by two bits and wherein combining the plurality of comparison results to form the feature descriptor comprises combining bits corresponding to the plurality of filter response to one or more bytes that form the feature descriptor.

13. Method according to any one of claims 10 to 12, wherein at least two evaluation regions overlap in a portion of the image section.

14. Method according to any one of claims 10 to 13, wherein comparing the filter responses comprises a determination of a bit pair for each one of the plurality of filter responses as the comparison result, wherein a value of the bit pair represents a relation of the corresponding filter response to the at least one threshold and a second threshold, and wherein the feature descriptor has a dimension of 512 and a size of 64 bytes.

15. Computer program having a program code for performing, when running on a computer or microprocessor, a method according to one of the claims 10 to 14.

**Patentansprüche**

1. Vorrichtung (400) zum Bestimmen eines Merkmalsbeschreibungselements (40) eines Bildabschnitts, wobei der Bildabschnitt basierend auf einem Punkt von Interesse bestimmt wird, der der Vorrichtung als ein Eingabeparameter bereitgestellt wird, wobei die Vorrichtung konfiguriert ist, Informationen bezüglich einer Position und eines Maßstabs des Punkts von Interesse zu empfangen und den Bildabschnitt basierend auf der Position des Punkts von Interesse zu bestimmen, die folgende Merkmale aufweist:

eine Semantischer-Betriebssystemkern-Bereitstellungseinrichtung (310), die konfiguriert ist, 16 semantische Betriebssystemkerne bereitzustellen, wobei jeder semantische Betriebssystemkern eine geometrische Struktur darstellt, die aus einer Gruppe ausgewählt ist, die aus Folgendem besteht: Ränder, Stege, Ecken, Blob-Felder und Sattelflächen;

einen Interpolator, der konfiguriert ist, eine Unterstützungsregion zu erhalten durch Interpolieren des Bildabschnitts basierend auf dem Maßstab des Punkts von Interesse,

eine Betriebssystemkern-Auswertungseinrichtung (230), die konfiguriert ist, 256 Filterantworten zu bestimmen, die sich aus dem Anlegen semantischer Betriebssystemkerne an 16 Auswertungsregionen ergeben, die sich in der Unterstützungsregion befinden; und

einen Komparator (330), der konfiguriert ist, jede der Filterantworten mit zumindest einem Schwellenwert zu vergleichen und eine Mehrzahl von Vergleichsergebnissen bereitzustellen, wobei das Merkmalsbeschreibungselement die Mehrzahl von Vergleichsergebnissen aufweist, wobei jedes der Mehrzahl von Vergleichselementen durch ein Bit oder durch zwei Bits dargestellt ist,

wobei die Vorrichtung (400) ferner einen Merkmalsbeschreibungselementgenerator aufweist, der konfiguriert ist, die Mehrzahl von Vergleichsergebnissen zu kombinieren, um zumindest einen Abschnitt des Merkmalsbeschreibungselements zu bilden, durch Verwenden der Mehrzahl von Vergleichsergebnissen, um ein oder mehrere Bytes des Merkmalsbeschreibungselements zu bilden, und wobei das Merkmalsbeschreibungselement eine Abmessung von 256 und eine Größe von 32 Bytes beziehungsweise eine Abmessung von 512 und eine Größe von 64 Bytes aufweist.

2. Vorrichtung gemäß Anspruch 1, bei der die Informationen bezüglich der Position des Punkts von Interesse Informationen sind, die sich auf eine Teilpixelposition des Punkts von Interesse beziehen.

3. Vorrichtung gemäß einem der Ansprüche 1 bis 2, bei der zumindest einer der Betriebssystemkerne eine innerste Region aufweist, die positive Gewichtungen aufweist, wobei die innerste Region durch eine Region mit negativen Gewichtungen umgeben ist, wobei beide Regionen die gleiche Oberfläche und eine quadratische äußere Form aufweisen.

4. Vorrichtung gemäß Anspruch 3, bei der eine äußere Region in Bezug auf das Quadrat mit den negativen Gewichtungen die Gewichtungen aufweist, die auf null gesetzt sind.

5. Vorrichtung gemäß einem der Ansprüche 1 bis 4, bei der zumindest zwei Auswertungsregionen in einem Abschnitt des Bildabschnitts überlappen.

6. Vorrichtung gemäß einem der Ansprüche 1 bis 5, bei der der Komparator konfiguriert ist, um als Vergleichsergebnis ein Bitpaar für jede einzelne der Mehrzahl von Filterantworten zu bestimmen, wobei ein Wert des Bitpaars eine Beziehung der entsprechenden Filterantwort zu dem zumindest einen Schwellenwert und einem zweiten Schwellenwert darstellt, und wobei das Merkmalsbeschreibungselement eine Abmessung von 512 und eine Größe von 64 Bytes aufweist.

7. Vorrichtung gemäß einem der Ansprüche 1 bis 6, bei der der Komparator ferner konfiguriert ist, den zumindest einen Schwellenwert einzustellen, so dass eine vorbestimmte Anzahl von Filterantworten den Schwellenwert überschreitet.

8. Vorrichtung gemäß einem der Ansprüche 1 bis 7, bei der das Merkmalsbeschreibungselement durch Binärzahlen gebildet ist.

9. Vorrichtung gemäß einem der Ansprüche 1 bis 8, bei der jeder semantische Betriebssystemkern durch zumindest vier unterschiedliche Werte ausgedrückt ist.

10. Verfahren zum Bestimmen eines Merkmalsbeschreibungselements eines Bildabschnitts, wobei das Verfahren folgende Schritte aufweist:

Empfangen (171) eines Punkts von Interesse als einen Eingabeparameter, Empfangen von Informationen bezüglich einer Position und eines Maßstabs des Punkts von Interesse;
Bestimmen (172) eines Bildabschnitts basierend auf der Position des Punkts von Interesse;
Interpolieren (173) des Bildabschnitts basierend auf dem Maßstab des Punkts von Interesse, um eine Unterstützungsregion zu erhalten,
Bereitstellen (174) von 16 semantischen Betriebssystemkernen, wobei jeder semantische Betriebssystemkern eine geometrische Struktur darstellt, die aus einer Gruppe ausgewählt ist, die aus Rändern, Stegen, Ecken, Blob-Feldern und Sattelflächen besteht,
Bestimmen (175, 176) einer Unterstützungsregion für semantische Betriebssystemkerne, wobei die Unterstützungsregion auf die Eigenschaften der semantischen Betriebssystemkerne eingestellt ist, wie z. B. Größe (in Pixel) und Maßstab;
Bestimmen (177) von 256 Filterantworten, die sich aus dem Anlegen der semantischen Betriebssystemkerne an 16 Auswertungsregionen, die sich in der Unterstützungsregion befinden, ergeben, wobei das Bestimmen der Mehrzahl von Filterantworten ein Anlegen der semantischen Betriebssystemkerne an die Auswertungsregionen aufweist,
Vergleichen (178) jeder der Filterantworten mit zumindest einem Schwellenwert und Bereitstellen einer Mehrzahl von Vergleichsergebnissen; und
Kombinieren (179) der Mehrzahl von Vergleichsergebnissen, um das Merkmalsbeschreibungselement zu bilden, wobei das Merkmalsbeschreibungselement eine Abmessung von 256 und eine Größe von 32 Bytes beziehungsweise eine Abmessung von 512 und eine Größe von 64 Bytes aufweist.

11. Verfahren gemäß Anspruch 10, bei dem die Informationen, die sich auf die Position des Punkts von Interesse beziehen, Informationen sind, die sich auf eine Teilpixelposition des Punkts von Interesse beziehen.

12. Verfahren gemäß einem der Ansprüche 10 bis 11, bei dem jedes der Mehrzahl von Vergleichsergebnissen durch ein Bit oder durch zwei Bits dargestellt ist, und wobei ein Kombinieren der Mehrzahl von Vergleichsergebnissen, um das Merkmalsbeschreibungselement zu bilden, ein Kombinieren von Bits aufweist, die der Mehrzahl von Filterantworten entsprechen, mit einem oder mehreren Bytes, die das Merkmalsbeschreibungselement bilden.

13. Verfahren gemäß einem der Ansprüche 10 bis 12, bei dem zumindest zwei Auswertungsregionen in einem Abschnitt des Bildabschnitts überlappen.

**14.** Verfahren gemäß einem der Ansprüche 10 bis 13, bei dem ein Vergleichen der Filterantworten eine Bestimmung eines Bitpaars für jedes der Mehrzahl von Filterantworten als das Vergleichsergebnis aufweist, wobei ein Wert des Bitpaars eine Beziehung der entsprechenden Filterantwort zu dem zumindest einen Schwellenwert und einem zweiten Schwellenwert darstellt, und wobei das Merkmalsbeschreibungselement eine Abmessung von 512 und eine Größe von 64 Bytes aufweist.

**15.** Computerprogramm mit einem Programmcode zum Durchführen, wenn dasselbe auf einem Computer oder Mikroprozessor läuft, eines Verfahrens gemäß einem der Ansprüche 10 bis 14.

## Revendications

**1.** Appareil (400) pour déterminer un descripteur de caractéristiques (40) d'un segment d'image, dans lequel le segment d'image est déterminé sur base d'un point d'intérêt qui est fourni comme paramètre d'entrée à l'appareil, l'appareil étant configuré pour recevoir les informations relatives à une position et une échelle du point d'intérêt et pour déterminer le segment d'image sur base de la position du point d'intérêt, comprenant:

un fournisseur de noyaux sémantiques (310) configuré pour fournir 16 noyaux sémantiques, chaque noyau sémantique représentant une structure géométrique qui est sélectionnée dans un groupe constitué de: bords, arêtes, coins, taches et marques;
un interpolateur configuré pour obtenir une région de support en interpolant le segment d'image sur base de l'échelle du point d'intérêt;
un évaluateur de noyaux (320) configuré pour déterminer 256 réponses de filtre résultant de l'application des noyaux sémantiques à 16 régions d'évaluation situées dans la région de support; et
un comparateur (330) configuré pour comparer chacune des réponses de filtre avec au moins un seuil et pour fournir une pluralité de résultats de comparaison, où le descripteur de caractéristiques comprend la pluralité de résultats de comparaison, où chacun de la pluralité de résultats de comparaison est représenté par un bit ou par deux bits,
dans lequel l'appareil (400) comprend par ailleurs un générateur de descripteur de caractéristiques configuré pour combiner la pluralité de résultats de comparaison pour former au moins une partie du descripteur de caractéristiques à l'aide de la pluralité de résultats de comparaison pour former un ou plusieurs octets du descripteur de caractéristiques, et dans lequel le descripteur de caractéristiques présente respectivement une dimension de 256 et une grandeur de 32 octets, ou une dimension de 512 et une grandeur de 64 octets.

**2.** Appareil selon la revendication 1, dans lequel les informations relatives à la position du point d'intérêt sont des informations relatives à une position de sous-pixel du point d'intérêt.

**3.** Appareil selon l'une quelconque des revendications 1 ou 2, dans lequel au moins un des noyaux présente une région la plus à l'intérieur présentant des poids positifs, la région la plus à l'intérieur étant entourée d'une région à poids négatifs, les deux régions présentant la même surface et une forme extérieure carrée.

**4.** Appareil selon la revendication 3, dans lequel une région extérieure par rapport à la région de forme carrée aux poids négatifs présente les poids réglés à zéro.

**5.** Appareil selon l'une quelconque des revendications 1 à 4, dans lequel au moins deux régions d'évaluation se chevauchent dans une partie du segment d'image.

**6.** Appareil selon l'une quelconque des revendications 1 à 5, dans lequel le comparateur est configuré pour déterminer, comme résultat de comparaison, une paire de bits pour chacune de la pluralité de réponses de filtre, dans lequel une valeur de la paire de bits représente un rapport entre la réponse de filtre correspondante et l'au moins un seuil et un deuxième seuil, et dans lequel le descripteur de caractéristiques présente une dimension de 512 et une grandeur de 64 octets.

**7.** Appareil selon l'une quelconque des revendications 1 à 6, dans lequel le comparateur est par ailleurs configuré pour ajuster l'au moins un seuil de sorte qu'un nombre prédéterminé de réponses de filtre excède le seuil.

**8.** Appareil selon l'une quelconque des revendications 1 à 7, dans lequel le descripteur de caractéristiques est formé de nombres binaires.

**9.** Appareil selon l'une quelconque des revendications 1 à 8, dans lequel chaque noyau sémantique est exprimé par tout au plus quatre valeurs différentes.

**10.** Procédé de détermination d'un descripteur de caractéristiques d'un segment d'image, le procédé comprenant le fait de :

> recevoir (171) un point d'intérêt comme paramètre d'entrée, recevoir les informations relatives à une position et une échelle du point d'intérêt ;
> déterminer (172) un segment d'image sur base de la position du point d'intérêt ;
> interpoler (173) le segment d'image sur base de l'échelle du point d'intérêt pour obtenir une région de support,
> fournir (174) 16 noyaux sémantiques, chaque noyau sémantique représentant une structure géométrique sélectionnée dans un groupe constitué d'arêtes, de crêtes, de coins, de taches et de marques ;
> déterminer (175, 176) une région de support pour les noyaux sémantiques, où la région de support est ajustée aux propriétés des noyaux sémantiques, telles que la grandeur (en pixels) et l'échelle ;
> déterminer (177) 256 réponses de filtre résultant de l'application des noyaux sémantiques à 16 régions d'évaluation situées dans la région de support, où la détermination de la pluralité de réponses de filtre comprend le fait d'appliquer les noyaux sémantiques aux régions d'évaluation,
> comparer (178) chacune des réponses de filtre avec au moins un seuil et fournir une pluralité de résultats de comparaison ; et
> combiner (179) la pluralité de résultats de comparaison pour former le descripteur de caractéristiques, où le descripteur de caractéristiques présente respectivement une dimension de 256 et une grandeur de 32 octets, ou une dimension de 512 et une grandeur de 64 octets.

**11.** Procédé selon la revendication 10, dans lequel les informations relatives à la position du point d'intérêt sont des informations relatives à une position de sous-pixel du point d'intérêt.

**12.** Procédé selon l'une quelconque des revendications 10 à 11, dans lequel chacun de la pluralité de résultats de comparaison est représenté par un bit ou par deux bits et dans lequel la combinaison de la pluralité de résultats de comparaison pour former le descripteur de caractéristiques comprend le fait de combiner les bits correspondant à la pluralité de réponses de filtre à un ou plusieurs octets qui forment le descripteur de caractéristiques.

**13.** Procédé selon l'une quelconque des revendications 10 à 12, dans lequel au moins deux régions d'évaluation se chevauchent dans une partie du segment d'image.

**14.** Procédé selon l'une quelconque des revendications 10 à 13, dans lequel la comparaison des réponses de filtre comprend une détermination d'une paire de bits pour chacune de la pluralité de réponses de filtre comme résultat de comparaison, dans lequel une valeur de la paire de bits représente un rapport entre la réponse de filtre correspondante et l'au moins un seuil et un deuxième seuil, et dans lequel le descripteur de caractéristiques présente une dimension de 512 et une grandeur de 64 octets.

**15.** Programme d'ordinateur présentant un code de programme pour réaliser, lorsqu'il est exécuté sur un ordinateur ou un microprocesseur, un procédé selon l'une des revendications 10 à 14.

FIG 1

21

FIG 2

upper neighboring scale

pixel to be evaluated

current scale

lower neighboring scale

neighboring pixels
(26 neighbors in total)

**FIG 3**

⬤ kernel set evaluation

⬤ interest point position

FIG 4

FIG 5

☰ pixel evaluated 1x

▨ pixel evaluated 2x

▥ pixel evaluated 3x

# FIG 6

kernel set evaluation

interest point position

FIG 7

FIG 8D

FIG 8C

FIG 8B

FIG 8A

FIG 9D

FIG 9C

FIG 9B

FIG 9A

FIG 10A       FIG 10B       FIG 10C       FIG 10D

FIG 11A       FIG 11B       FIG 11C       FIG 11D

EP 2 695 106 B1

image section — 11

300

310 — semantic kernel provider

semantic kernel(s)

kernel evaluator — 320

filter responses

comparator — 330

comparison results

feature descriptor — 40

## FIG 12

from interest point
detector

image ⟋10

interest point

400

405 310

image section
determination

semantic kernel
provider

image
section

semantic
kernels

kernel evaluator ⟋320

filter
responses

threshold(s) ⟶ comparator ⟋330

comparison results

feature descriptor ⟋40

FIG 13

semantic kernel

image section

evaluation region

image feature

interset point

FIG 14

EP 2 695 106 B1

FIG 15

164

Providing a plurality of semantic kernels,
each semantic kernel representing
a geometric structure

167

Determining a plurality of filter responses resulting
from applying the semantic kernels to one or
more evaluation regions within the image section

168

Comparing each one of the plurality
of filter responses with at least one threshold
and to provide a plurality of comparison results

169

Combining the plurality of comparison results
to from the  feature descriptor

FIG 16

171

| Receiving an interest point as an input parameter |

↓

172

| Determining image section based on an interest point |

↓

173

| Interpolating the image section based on at least one property of the interest point |

↓

174

| Providing a plurality of semantic kernels, each semantic kernel representing a geometric structure |

↓

175

| Determining a first normalized support region for a first subset of the plurality of semantic kernels |

↓

176

| Determining a different second normalized support region for a second subset of the plurality of semantic kernels |

↓

177

| Determining a plurality of filter responses resulting from applying the semantic kernels to one or more evaluation regions within the image section |

↓

178

| Comparing each one of the plurality of filter responses with at least one threshold and to provide a plurality of comparison results |

↓

179

| Combining the plurality of comparison results to form the feature descriptor |

FIG 17

bikes 1 matched against bikes 6

FIG 18A

EP 2 695 106 B1

ubc 1 matched against ubc 6

FIG 18B

EP 2 695 106 B1

FIG 19A

FIG 19B

FIG 19C

EP 2 695 106 B1

recall

0.8
0.7
0.6
0.5
0.4
0.3
0.2
0.1
0

0    0.05   0.1   0.15   0.2   0.25   0.3   0.35   0.4

1-precision

**FIG 19D**

Cross Correlation
GLOH
SIFT
SKB-A
SKB-B
SKB-C
43% recall

FIG 20

**FIG 21A**

EP 2 695 106 B1

Trees (Blur)

**FIG 21B**

EP 2 695 106 B1

UBC (Jpeg compression)

FIG 21C

FIG 21D

EP 2 695 106 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. LOWE.** Distinctive image features from scale invariant keypoints. *IJCV,* 2004, vol. 60 (2), 91-110
- **HERBERT BAY ; ANDREAS ESS ; TINNE TUYTELAARS ; LUC VAN GOOL.** SURF: Speeded Up Robust Features. *Computer Vision and Image Understanding (CVIU),* 2008, vol. 110 (3), 346-359
- **HARTLEY, R. ; ZISSERMAN, A.** Multiple view geometry in computer vision. Cambridge University Press, 2000
- **K. MIKOLAJCZYK ; C. SCHMID.** A performance evaluation of local descriptors. *PAMI,* 2005, vol. 27 (10), 1615-1630
- **K. MIKOLAJCZYK ; T. TUYTELAARS ; C. SCHMID ; A. ZISSERMAN ; J. MATAS ; F. SCHAFFALITZKY ; T. KADIR ; L. VAN GOOL.** A comparison of affine region detectors. *IJCV,* 2005, vol. 65 (112), 43-72
- **K. MIKOLAJCZYK ; C. SCHMID.** Scale and Affine invariant interest point detectors. *IJCV,* 2004, vol. 60 (1), 63-86
- **T. LINDEBERG.** Feature Detection with Automatic Scale Selection. *Int'l J. Computer Vision,* 1998, vol. 30 (2), 79-116
- **J. MATAS ; O. CHUM ; M. URBAN ; T. PAJDLA.** Robust wide baseline stereo from maximally stable extremal regions. *BMVC,* 2002, 384-393
- **T. TUYTELAARS ; L. VAN GOOL.** Matching widely separated views based on affine invariant regions. *IJCV,* 2004, vol. 59 (1), 61-85
- **T. KADIR ; A. ZISSERMAN ; M. BRADY.** An affine invariant salient region detector. *ECCV,* 2004, 404-416
- **C. HARRIS ; M. STEPHENS.** A combined corner and edge detector. *Proceedings of the Alvey Vision Conference,* 1988, 147-151
- **M. BROWN ; D. LOWE.** Invariant features from interest point groups. *BMVC,* 2002

- **D. LOWE.** Object recognition from local scale-invariant features. *ICCV,* 1999
- **Y. KE ; R. SUKTHANKAR.** SIFT: A more distinctive representation for local image descriptors. *CVPR,* 2004, vol. 2, 506-513
- **P.A. VIOLA ; M.J. JONES.** Rapid object detection using a boosted cascade of simple features. *CVPR,* 2001, vol. 1, 511-518
- **A. NEUBECK ; L. VAN GOOL.** Efficient non-maximum suppression. *ICPR,* 2006
- *Intel SSE4 Programming Reference,* April 2007
- **M. CALENDER ; V. LEPETIT ; P. FUA.** BRIEF: Binary Robust Independent Elementary Features. *Proceedings of the European Conference on Computer Vision,* 2010
- **J. VENTURA ; T. HÖLLERER.** Fast and Scalable Keypoint Recognition and Image Retrieval Using Binary Codes. *IEEE Workshop on Motion and Video Computing (WMVC),* 2011
- **J. BRANDT.** Transform coding for fast approximate nearest neighbor search in high dimensions. *IEEE Conference on Computer Vision and Pattern Recognition (CVPR),* 2010, 1815-1822
- **V. CHANDRASEKHAR ; G. TAKACS ; D. M. CHEN ; S. S. TSAI ; R. GRZESZCZUK ; Y. REZNIK ; B. GIROD.** Compressed histogram of gradients: A low bitrate descriptor. *In Int. J. Comput. Vis. (Special Issue on Mobile Vision),* May 2011, 1-16
- **M. STOMMEL.** Binarising SIFT-Descriptors to Reduce the Curse of Dimensionality in Histogram-Based Object Recognition. *International Journal of Signal Processing, Image Processing and Pattern Recognition,* 01 March 2010, vol. 3
- **EBRAHIMI, M. ; MAYOL-CUEVAS, W.** SUSurE: Speeded up surround extrema feature detector and descriptor for realtime applications. In Workshop on feature detectors and descriptors: the state of the art and beyond. *IEEE conference on computer vision and pattern recognition (CVPR),* 2009